# EUROPEAN PATENT APPLICATION

(11) **EP 4 387 330 A1**
(43) Date of publication of application: **19.06.2024**
(21) Application number: 22874477.7
(22) Date of filing: 19.08.2022
(51) Int. Cl.: H04W 48/00

(54) **DATA TRANSMISSION METHOD BASED ON WIRELESS NETWORK (WI-FI), AND ELECTRONIC DEVICE**

(30) Priority: 29.09.2021 CN 202111153020
(71) Applicant: Huawei Technologies Co., Ltd., Shenzhen, Guangdong 518129 (CN)
(72) Inventor: ZHANG, Yunji, Shenzhen, Guangdong 518129 (CN); ZHANG, Li, Shenzhen, Guangdong 518129 (CN)
(74) Representative: MERH-IP Matias Erny Reichl Hoffmann Patentanwälte PartG mbB
(86) International application number: PCT/CN2022/113610
(87) International publication number: WO 2023/051082

(57) **Abstract**

This application provides a data transmission method based on a wireless network Wi-Fi and an electronic device, and relates to the field of terminal technologies. The method includes: A first device negotiates, with a second device, first capability information, a first service type, and at least one of first battery information and second battery information. The first device determines a first transmission parameter based on the first service type, the first capability information, and at least one of the first battery information and the second battery information. The first device sends the first transmission parameter to the second device. The first device performs data transmission with the second device based on the first transmission parameter. The first capability information indicates a device capability jointly supported by the first device and the second device, the first service type is a service type corresponding to to-be-transmitted data of the first device and the second device, and the first device and the second device are connected through Wi-Fi. According to the technical solutions provided in this application, power consumption of the device can be reduced.

## Description

This application claims priority to Chinese Patent Application No. 202111153020.9, filed with the China National Intellectual Property Administration on September 29, 2021 and entitled "DATA TRANSMISSION METHOD BASED ON WIRELESS NETWORK WI-FI AND ELECTRONIC DEVICE", which is incorporated herein by reference in its entirety.

### TECHNICAL FIELD

This application relates to the field of terminal technologies, and in particular, to a data transmission method based on Wi-Fi (wireless network) and an electronic device.

### BACKGROUND

Wi-Fi is a wireless network technology that has advantages such as a high bandwidth, low power consumption, and low costs, and is widely applied to various scenarios such as homes, offices, and shopping malls. Electronic devices may establish a connection through Wi-Fi and perform data transmission. When power consumption required for transmitting data is low, a requirement for a power supply manner of the electronic device can be reduced, and a service life of the electronic device can be prolonged. Therefore, how to reduce power consumption in a Wi-Fi-based data transmission process is also increasingly widely concerned.

In a conventional technology, an electronic device may determine a fixed transmission parameter in advance, and perform data transmission with another electronic device based on the fixed transmission parameter. However, during actual application, electronic devices that perform data transmission and transmitted data may be diversified, but a data transmission mode indicated by the fixed transmission parameter is fixed. Consequently, it is difficult to reduce power consumption when different electronic devices perform data transmission in the fixed transmission mode.

### SUMMARY

In view of this, this application provides a data transmission method based on Wi-Fi and an electronic device.

To achieve the foregoing objective, according to a first aspect, an embodiment of this application provides a data transmission method based on Wi-Fi. The method includes:

A first device negotiates, with a second device, first capability information, a first service type, and at least one of first battery information and second battery information.

The first device determines a first transmission parameter based on the first service type, the first capability information, and at least one of the first battery information and the second battery information.

The first device sends the first transmission parameter to the second device.

The first device performs data transmission with the second device based on the first transmission parameter.

The first battery information indicates a battery status of the first device, the second battery information indicates a battery status of the second device, the first capability information indicates a device capability jointly supported by the first device and the second device, the first service type is a service type corresponding to to-be-transmitted data of the first device and the second device, and the first device and the second device are connected through Wi-Fi.

In this embodiment of this application, the first device may negotiate with the second device, to obtain the first capability information jointly supported by the first device and the second device, the first service type corresponding to the to-be-transmitted data, and at least one of the first battery information of the first device and the second battery information of the second device. Determining the first transmission parameter based on the first capability information, the first service type, and at least one of the first battery information and the second battery information of the second device is selecting, within a device capability range jointly supported by the first device and the second device, a transmission mode that matches the first service type of the to-be-transmitted data and a battery status of at least one of the first device and the second device. In this case, power consumption of at least one of the first device and the second device can be reduced by performing data transmission in the transmission mode.

In some embodiments, that the first device performs device capability negotiation with the second device may include: The second device sends the second battery information and second capability information of the second device to the first device, and the first device sends the first battery information and third capability information of the first device to the second device, so that the first device and the second device may obtain the first battery information and the second battery information, and the first device may also determine, based on the second capability information and the third capability information, the first capability information jointly supported by the first device and the second device. The second capability information may indicate a device capability supported by the second device, and the third capability information may indicate a device capability supported by the first device.

In some embodiments, that the first device performs device capability negotiation with the second device may include: The first device sends a first obtaining request to the second device. The second device sends the second battery information and second capability information to the first device based on the first obtaining request. The first device receives the second battery information and the second capability information, and determines the first capability information based on the second capability information and third capability information. In other words, the first device no longer sends the first battery information and the third capability information to the second device.

It should be noted that the first device and the second device may alternatively perform device capability negotiation in another manner. A manner of the device capability negotiation is not specifically limited in this embodiment of this application.

In some embodiments, the first device may send a second obtaining request to the second device, and the second device feeds back the first service type to the first device based on the second obtaining request. Certainly, during actual application, the first device and the second device may alternatively perform service type negotiation in another manner. A manner of the service type negotiation is not specifically limited in this embodiment of this application.

In some embodiments, service types may be classified based on functions of services, for example, classified as a video service or a web page service. In some other embodiments, service types may be classified based on data stream directions of services, for example, classified as a unidirectional streaming service or a bidirectional streaming service. It should be noted that a service type classification manner may be determined in advance by persons skilled in the art. During actual application, service types may alternatively be classified based on features of another aspect of to-be-transmitted services. The service type classification manner is not specifically limited in this embodiment of this application.

Optionally, the first capability information indicates at least one first multiple-input multiple-output (multiple-input multiple-output, MIMO) mode for which the first device and the second device support adjustment, and that the first device determines a first transmission parameter based on the first service type, the first capability information, and at least one of the first battery information and the second battery information includes:
The first device determines a second MIMO mode from the at least one first MIMO mode based on the first service type and at least one of the first battery information and the second battery information.

Optionally, the first capability information indicates that the first device and the second device support adjustment of a maximum MIMO mode, and a plurality of supported first MIMO modes do not need to be enumerated. Before that the first device determines a first transmission parameter based on the first service type, the first capability information, and at least one of the first battery information and the second battery information, the method further includes:
The first device determines at least one first MIMO mode jointly supported by the first device and the second device.

That the first device determines a first transmission parameter based on the first service type, the first capability information, and at least one of the first battery information and the second battery information includes:
The first device determines a second MIMO mode from the at least one first MIMO mode based on the first service type and at least one of the first battery information and the second battery information.

It should be noted that the first MIMO mode may include M-input N-output, where M is a quantity of transmit antennas, N is a quantity of receive antennas, M and N are positive integers, and M and N may be the same.

It should be further noted that the first device may determine (for example, according to a Wi-Fi protocol) in advance at least one MIMO mode supported by the second device, and determine, based on the at least one MIMO mode supported by the second device and at least one MIMO mode supported by the first device, the at least one first MIMO mode jointly supported by the first device and the second device. In addition, in some embodiments, the at least one first MIMO mode may not be determined by the first device based on the at least one MIMO mode supported by the second device and the at least one MIMO mode supported by the first device, but may be a preset MIMO mode in the first device or a MIMO mode supported by the first device. In this case, the first device may also determine, when determining that the first capability information indicates that the first device and the second device support adjustment of the maximum MIMO mode, the second MIMO mode in the at least one preset first MIMO mode or the at least one first MIMO mode supported by the first device.

In some embodiments, the first device may store a correspondence between battery information, capability information, a service type, and a transmission parameter. The correspondence includes at least one piece of battery information, at least one piece of capability information, at least one service type, and at least one transmission parameter. The first device may obtain, from the correspondence, the first transmission parameter corresponding to the first service type, the first capability information, and at least one of the first battery information and the second battery information.

In some embodiments, the first device may input the first service type, the first capability information, and at least one of the first battery information and the second battery information into a trained machine learning model, and obtain the first transmission parameter by using the machine learning model.

Optionally, the first capability information indicates at least one first bandwidth supported by the first device and the second device, and that the first device determines a first transmission parameter based on the first service type, the first capability information, and at least one of the first battery information and the second battery information includes:
The first device determines a second bandwidth from the at least one first bandwidth based on the first service type and at least one of the first battery information and the second battery information.

Optionally, the first capability information indicates that the first device and the second device support adjustment of a maximum bandwidth, and a plurality of supported first bandwidths do not need to be enumerated. Before that the first device determines a first transmission parameter based on the first service type, the first capability information, and at least one of the first battery information and the second battery information, the method further includes:
The first device determines at least one first bandwidth jointly supported by the first device and the second device.

That the first device determines a first transmission parameter based on the first service type, the first capability information, and at least one of the first battery information and the second battery information includes:
The first device determines a second bandwidth from the at least one first bandwidth based on the first service type and at least one of the first battery information and the second battery information.

It should be noted that the first device may determine (for example, according to the Wi-Fi protocol) in advance at least one bandwidth mode supported by the second device, and determine, based on the at least one bandwidth supported by the second device and at least one bandwidth supported by the first device, the at least one first bandwidth jointly supported by the first device and the second device. In addition, in some embodiments, the at least one first bandwidth may not be determined by the first device based on the at least one bandwidth supported by the second device and the at least one bandwidth supported by the first device, but may be a preset bandwidth in the first device or a bandwidth supported by the first device. In this case, the first device may also determine, when determining that the first capability information indicates that the first device and the second device support adjustment of the maximum bandwidth, the second bandwidth in the at least one preset first bandwidth or the at least one first bandwidth supported by the first device.

Optionally, the first battery information indicates at least one of a battery capacity of the first device, a battery level of the first device, a plug-in status of the first device, and a power saving mode status of the first device, the plug-in status of the first device includes being currently connected to a power supply or not being connected to a power supply, and the power saving mode status of the first device includes whether a power saving mode is enabled. The second battery information indicates at least one of a battery capacity of the second device, a battery level of the second device, a plug-in status of the second device, and a power saving mode status of the second device, the plug-in status of the second device includes being currently connected to a power supply or not being connected to a power supply, and the power saving mode status of the second device includes whether a power saving mode is enabled.

Optionally, a type of a connection between the first device and the second device is peer-to-peer (peer-to-peer, P2P), the first device is a group owner (group owner, GO), and the second device is a group client (group client, GC).

Optionally, the first capability information indicates that the first device and the second device support data transmission scheduling based on notification of active (notification of active, NoA) signaling, and that the first device determines a first transmission parameter based on the first service type, the first capability information, and at least one of the first battery information and the second battery information includes:
The first device determines a first NoA policy based on the first service type, the first capability information, and at least one of the first battery information and the second battery information.

In other words, in a P2P scenario, the first transmission parameter may include at least one of the first NoA policy, the second MIMO mode, and the second bandwidth.

The first NoA policy may include a first transmission time period interval and a first sleep time period.

It should be noted that, if the first device and the second device are more sensitive to power consumption, power consumption of the transmission mode indicated by the first transmission parameter may be lower. For example, if neither the first device nor the second device is connected to a power supply, and battery capacities and battery levels of the first device and the second device are lower, duration of the first sleep time period in the first NoA policy may be longer, N and M in the second MIMO mode may be smaller, and a value of the second bandwidth may be smaller.

In some embodiments, if the first transmission parameter includes the first NoA policy, the first device and the second device may start to enter a sleep state at an interval of the first transmission time period interval (that is, the first sleep time period). When the first sleep time period ends, the first device and the second device may enter a wake-up state. In the wake-up state, the first device performs data transmission with the second device. For example, the first device may send data to the second device. Therefore, the first device and the second device may adjust a transmission time period interval and a sleep time period based on support of both the first device and the second device, to enable a sleep occasion and sleep duration to match a power status of at least one of the first device and the second device and a service type of transmitted data. This can resolve a problem of a power consumption waste, and resolve a problem of user experience deterioration caused by mismatch between a transmission mode and a service type. When the duration of the first sleep time period is longer, power consumption generated by the first device and the second device is lower.

In some embodiments, if the first transmission parameter includes the second MIMO mode, the first device and the second device receive and send data based on the second MIMO mode. The first device and the second device may adjust an antenna working mode based on support of both the first device and the second device, to enable the antenna working mode to match a power status of at least one of the first device and the second device and a service type of transmitted data. This resolves a problem of a power consumption waste.

In some embodiments, if the first transmission parameter includes the second bandwidth, the first device and the second device may use the second bandwidth as the maximum bandwidth for data transmission. The first device and the second device may adjust a transmission bandwidth based on support of both the first device and the second device, to enable the transmission bandwidth to match a power status of at least one of the first device and the second device and a service type of transmitted data. This resolves a problem of a power consumption waste.

Optionally, the first device and the second device are devices in a same device-to-device (device-to-device, D2D) domain, a type of a connection between the first device and the second device is a D2D type, the first device is a primary transmission device, the second device is a secondary transmission device, and the primary transmission device is configured to control a data transmission process between the primary transmission device and the secondary transmission device.

Optionally, the first capability information indicates that the first device and the second device support scheduling of a time slot TS, and that the first device determines a first transmission parameter based on the first service type, the first capability information, and at least one of the first battery information and the second battery information includes:
The first device determines a first TS policy based on the first service type, the first capability information, and at least one of the first battery information and the second battery information.

In other words, in a D2D scenario, the first transmission parameter may include at least one of the first TS policy, the second MIMO mode, and the second bandwidth.

The first TS policy may indicate a wake-up-state TS and a sleep-state TS, and an electronic device that performs data transmission may sleep or perform data transmission in a unit of TS. In some embodiments, the first TS policy may indicate the wake-up-state TS and the sleep-state TS in a bitmap (bitmap) manner.

In some embodiments, the first TS policy may indicate a length of a discovery cycle, for example, a total quantity of TSs included in the discovery cycle.

It should be noted that, a discovery cycle (or referred to as a scheduling cycle) may include a discovery window (discovery window, DW) and a service time period. At least one TS in the front of the discovery cycle may correspond to the discovery window, and is used for clock synchronization. Other TSs after the at least one TS may correspond to the service time period. An electronic device that performs data transmission may sleep in a sleep-state TS corresponding to the service time period, and perform data transmission in a wake-up-state TS corresponding to the service time period. In addition, it should be further noted that a quantity of TSs used for clock synchronization in each discovery cycle may be notified by a primary domain device to a secondary domain device. Certainly, the secondary domain device may alternatively determine, in another manner, the quantity of TSs used for clock synchronization in each discovery cycle. A manner of determining the quantity of TSs used for clock synchronization in each discovery cycle is not specifically limited in this embodiment of this application.

It should be noted that, if the primary domain device is a third device instead of the first device, and the first device does not transmit data to another electronic device, the first device may also enter a sleep state in a second TS.

The first device and the second device may sleep in a unit of TS based on the first TS policy, so that control precision of a sleep occasion and sleep duration is improved, and power consumption can be further reduced.

Optionally, the first device is a secondary domain device, the D2D domain further includes the third device serving as the primary domain device, and the method further includes:
The first device determines a first synchronization cycle based on the first battery information.

The first device performs clock synchronization with the third device based on the first synchronization cycle.

The first synchronization cycle may be an integer multiple of the discovery cycle. The first device may perform clock synchronization with the third device in a discovery window in a discovery cycle corresponding to the first synchronization cycle. In this case, in a DW in a discovery cycle that does not correspond to the first synchronization cycle, the first device may enter the sleep state within time originally used for clock synchronization, to reduce power consumption.

Optionally, the method further includes:
The first device notifies the third device of the first synchronization cycle.

Because the first device is the secondary domain device, and the third device is the primary domain device, the third device may send a control instruction to the first device in a DW, for example, to control the first device to be powered off. If the first device is in the sleep state in a DW in a specific discovery cycle, the first device may not receive the control instruction. Therefore, the first device may notify the third device of the determined first synchronization cycle, to improve stability of a transmission system.

Optionally, the method further includes:
The first device determines a first measurement cycle based on the first battery information.

The first device measures communication quality of the connection between the first device and the second device based on the first measurement cycle.

The first device may measure the communication quality of the connection between the first device and the second device in a service time period in a discovery cycle corresponding to the first measurement cycle. In this case, in a service time period that does not correspond to the first measurement cycle, the first device may not perform communication quality measurement, and time originally used for measurement may be used for sleep, to reduce power consumption. The first measurement cycle and a second measurement cycle each may be an integer multiple of the discovery cycle.

In some embodiments, the first device determines the first measurement cycle, and measures the communication quality of the connection between the first device and the second device in the service time period in the discovery cycle corresponding to the first measurement cycle. In some other embodiments, the second device determines the second measurement cycle, measures the communication quality of the connection between the first device and the second device in the service time period in the discovery cycle corresponding to the first measurement cycle, and notifies the first device of a measurement result. Correspondingly, the first device may also receive the measurement result.

Optionally, if the first service type is a unidirectional streaming service, that the first device performs data transmission with the second device based on the first transmission parameter includes:
The first device obtains a plurality of to-be-transmitted first data packets.

The first device aggregates the plurality of first data packets into a second data packet.

The first device sends the second data packet to the second device based on the first transmission parameter.

When the first service type is a unidirectional streaming service, the first device may transmit one first data packet to the second device at an interval of first duration. A first transmission interval may be short, and it is difficult for the first device and the second device to sleep within the first transmission interval. Therefore, the first device may aggregate the plurality of first data packets to obtain the large second data packet, and send the second data packet to the second device. In other words, the first device may send the plurality of first data packets to the second device in a centralized manner. A transmission mode is changed from sending one first data packet at an interval of the first duration to sending one second data packet at an interval of second duration. A plurality of pieces of short first duration originally required for sending the plurality of first data packets may be aggregated into one piece of long second duration. The first device and the second device may sleep within the second duration, to reduce power consumption.

According to a second aspect, a data transmission apparatus is provided. The communication apparatus is configured to perform the method in any possible implementation of the first aspect. Specifically, the communication apparatus may include a processing unit and a transceiver unit. The transceiver unit may communicate with the outside, and the processing unit is configured to process data. The transceiver unit may also be referred to as a communication interface or a communication unit.

The communication apparatus may be configured to perform an action performed by the first device in any possible implementation of the first aspect. In this case, the communication apparatus may be referred to as a first device. The transceiver unit is configured to perform receiving and sending-related operations of the first device in any possible implementation of the first aspect. The processing unit is configured to perform a processing-related operation of the first device in any possible implementation of the first aspect.

According to a third aspect, an embodiment of this application provides an electronic device. The electronic device includes a memory and a processor. The memory is configured to store a computer program, and the processor is configured to perform the method in any implementation of the first aspect when invoking the computer program.

According to a fourth aspect, an embodiment of this application provides a chip system. The chip system includes a processor, and the processor is coupled to a memory. The processor executes a computer program stored in the memory, to implement the method in any implementation of the first aspect.

The chip system may be a single chip, or a chip module including a plurality of chips.

According to a fifth aspect, an embodiment of this application provides a computer-readable storage medium. The computer-readable storage medium stores a computer program. When the computer program is executed by a processor, the method in any implementation of the first aspect is implemented.

According to a sixth aspect, an embodiment of this application provides a computer program product. When the computer program product runs on an electronic device, the electronic device is enabled to perform the method in any implementation of the first aspect.

It may be understood that, for beneficial effect of the second aspect to the sixth aspect, refer to related descriptions in the first aspect. Details are not described herein again.

### BRIEF DESCRIPTION OF DRAWINGS

FIG. 1 is a schematic diagram of a structure of an electronic device according to an embodiment of this application;
FIG. 2 is a schematic diagram of a data transmission system according to an embodiment of this application;
FIG. 3 is a time sequence diagram of data transmission according to an embodiment of this application;
FIG. 4 is another time sequence diagram of data transmission according to an embodiment of this application;
FIG. 5 is a schematic diagram of another data transmission system according to an embodiment of this application;
FIG. 6 is a schematic diagram of a discovery cycle according to an embodiment of this application;
FIG. 7 is a flowchart of a data transmission method according to an embodiment of this application;
FIG. 8 is a schematic diagram of a MIMO mode according to an embodiment of this application;
FIG. 9 is a schematic diagram of another MIMO mode according to an embodiment of this application;
FIG. 10 is a time sequence diagram of transmitting a video frame according to an embodiment of this application;
FIG. 11 is a flowchart of another data transmission method according to an embodiment of this application;
FIG. 12 is a flowchart of a method for determining a synchronization cycle or a measurement cycle according to an embodiment of this application;
FIG. 13 is a time sequence diagram of another discovery cycle according to an embodiment of this application;
FIG. 14 is a schematic diagram of a structure of a data transmission apparatus according to an embodiment of this application; and
FIG. 15 is a schematic diagram of a structure of an electronic device according to an embodiment of this application.

### DESCRIPTION OF EMBODIMENTS

A data transmission method based on Wi-Fi provided in embodiments of this application may be applied to electronic devices such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), and a gateway. A specific type of the electronic device is not limited in embodiments of this application.

Wi-Fi is a wireless local area network technology based on the institute of electrical and electronics engineers (institute of electrical and electronics engineers, IEEE) 802.11 standard. Usually, Wi-Fi may also be referred to as wireless fidelity (wireless fidelity, Wi-Fi).

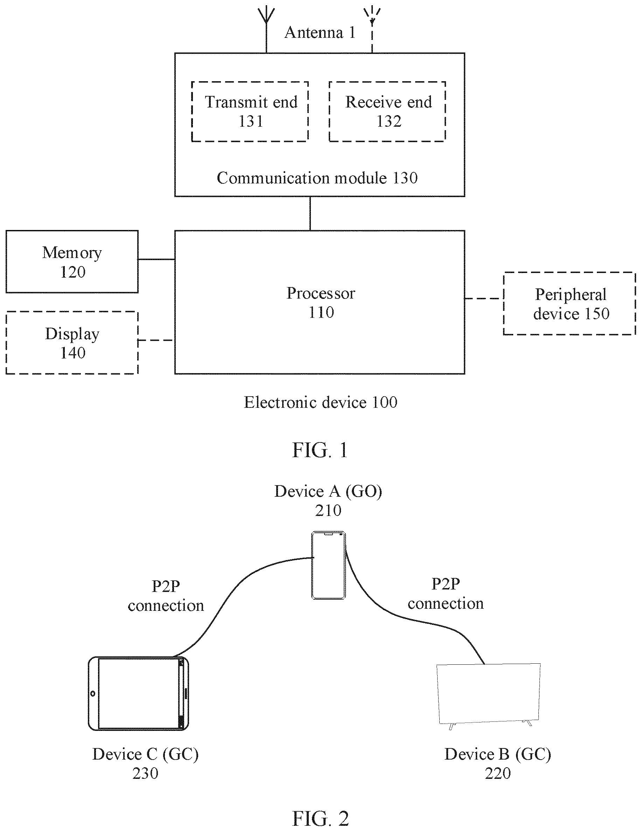

FIG. 1 is a schematic diagram of a structure of an electronic device 100 according to an embodiment of this application. The electronic device 100 may include a processor 110, a memory 120, a communication module 130, and the like.

The processor 110 may include one or more processing units. The memory 120 is configured to store program code and data. In this embodiment of this application, the processor 110 may execute computer-executable instructions stored in the memory 120, to control and manage an action of the electronic device 100.

The communication module 130 may include a Wi-Fi chip, to perform communication between the electronic device 100 and another external electronic device, and so on. The communication module 130 receives an electromagnetic wave through an antenna 1, performs frequency modulation and filtering processing on an electromagnetic wave signal, and sends a processed signal to the processor 110. The communication module 130 receives a to-be-sent signal from the processor 110, performs frequency modulation and amplification on the signal, and converts the signal into an electromagnetic wave through the antenna 1 and radiates the electromagnetic wave. In some embodiments, the communication module 130 may be coupled to the antenna 1.

There may be one or more antennas 1, and each antenna 1 may cover one or more communication frequency bands. The communication module 130 may control the antenna 1 configured to receive or send a signal.

In some embodiments, the communication module 130 may include a transmit end 131 and a receive end 132. The communication module 130 may send an electromagnetic wave signal through the transmit end 131, and receive an electromagnetic signal through the receive end 132. In some embodiments, the communication module 130 may control, by using a MIMO technology, a quantity of antennas 1 associated with the transmit end 131 or the receive end 132.

The MIMO technology means that a plurality of antennas are used at each of the transmit end 131 and the receive end 132, so that signals are transmitted and received through a plurality of antennas of the transmit end 131 and the receive end 132. In this way, communication quality is improved. In the MIMO technology, spatial resources can be fully used, and multiple-in multiple-output is implemented through the plurality of antennas, so that a system channel capacity can be exponentially increased without consuming more spectrum resources and increasing antenna transmit power. The MIMO technology may include spatial diversity and spatial multiplexing. The spatial diversity means that a plurality of antennas are used to send signals with same information on different paths, and a plurality of independently fading signals of a same data symbol are obtained at a receive end. In this way, receiving reliability is improved through diversity. The spatial multiplexing is to divide to-be-transmitted data into several data streams and transmit the data streams through different antennas. In this way, a transmission rate of a system is improved.

In some embodiments, the communication module 130 may include an audio component, a radio frequency circuit, a Bluetooth chip, a near-field communication (near-field communication, NFC) module, and the like, and may implement interaction between the electronic device 100 and another electronic device in a plurality of different manners.

In some embodiments, the electronic device 100 may further communicate with another electronic device in a wired connection manner, and the communication module 130 may include an interface, for example, a USB interface. The USB interface may be an interface that conforms to the USB standard specification, and may be specifically a mini USB interface, a micro USB interface, a USB Type-C interface, or the like. The USB interface may be configured to connect to a charger to charge the electronic device 100, may be configured to transmit data between the electronic device 100 and a peripheral device, and may be configured to connect to a headset to play audio through the headset. The interface may be further configured to connect to another electronic device, for example, an AR device.

In some embodiments, the communication module 130 may be further configured to perform communication between internal modules of the electronic device 100.

Optionally, the electronic device 100 may further include a display 140. The display 140 may display an image, a video, or the like in a human-computer interaction interface.

Optionally, the electronic device 100 may further include a peripheral device 150, for example, a mouse, a keyboard, a speaker, or a microphone.

It should be understood that, in addition to the various components or modules shown in FIG. 1, a structure of the electronic device 100 is not specifically limited in this embodiment of this application. In some other embodiments of this application, the electronic device 100 may further include more or fewer components than those shown in the figure, some components may be combined, or some components may be split, or different component arrangements may be used. The components shown in the figure may be implemented by using hardware, software, or a combination of software and hardware.

To facilitate understanding of the technical solutions in embodiments of this application, the following first describes application scenarios in embodiments of this application.

FIG. 2 is a schematic diagram of a data transmission system according to an embodiment of this application. The system includes a device A 210, a device B 220, and a device C 230. A connection between the device A 210 and the device B 220 and a connection between the device A 210 and the device C 230 are both P2P-type connections. A role of the device A 210 is a GO, and roles of the device B 220 and the device C 230 are GCs.

The device A 210 may broadcast NoA signaling. The device B 220 or the device C 230 may receive the NoA signaling, and perform data transmission with the device A 210 based on the NoA signaling.

The NoA signaling may indicate a data transmission occasion and a sleep occasion. The NoA signaling may include transmission start time, a quantity of transmission time periods, a transmission time period interval, and a sleep time period. The transmission start time may indicate a start moment at which data transmission is to be performed. The quantity of transmission time periods may indicate a quantity of transmission time periods for performing data transmission. The transmission time period interval may indicate duration of an interval between two adjacent transmission time periods, or may be understood as a transmission cycle. The sleep time period may indicate a time period in which sleep can be performed in each transmission time period, and each transmission time period may include one sleep time period. In the sleep time period, the GO and the GC may disable a radio frequency transceiver channel and protocol stacks at a physical layer and a media access control (media access control, MAC) layer, to enter a sleep state to reduce power consumption. In a remaining time period of the transmission time period, the GO and the GC may enter a wake-up state to perform monitoring and data transmission.

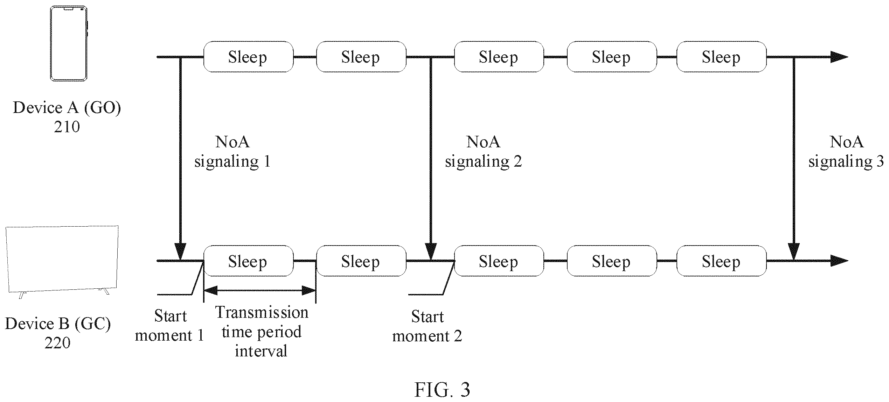

Data transmission between the device A210 and the device B 220 is used as an example. With reference to FIG. 3, the device A 210 broadcasts NoA signaling 1 to the device B 220, and indicates, by using the NoA signaling 1, that a transmission start moment is a moment 1, a quantity of transmission time periods is 2, a transmission time period interval is 33 ms (milliseconds), and a sleep time period is 20 ms. After the device A 210 notifies the device B 220 of a scheduling policy by using the NoA signaling 1, the device A 210 and the device B 220 may determine to enter the first transmission time period starting from the moment 1. Both the device A 210 and the device B 220 may sleep within the first 20 ms of the first transmission time period to reduce power consumption, then perform data transmission within the remaining 13 ms of the current transmission time period, and then enter the second transmission time period. When the two transmission time periods end, the device A 210 further broadcasts NoA signaling 2 to the device B 220, and indicates, by using the NoA signaling 2, that transmission start time is a moment 2, a quantity of transmission time periods is 3, a transmission time period interval is 33 ms, and a sleep time period is 20 ms. After notifying the device B 220 of a scheduling policy by using the NoA signaling 1, the device A210 performs data transmission in three transmission time periods. Then, the device A 210 may continue to broadcast NoA signaling 3 to the device B 230 for subsequent data transmission.

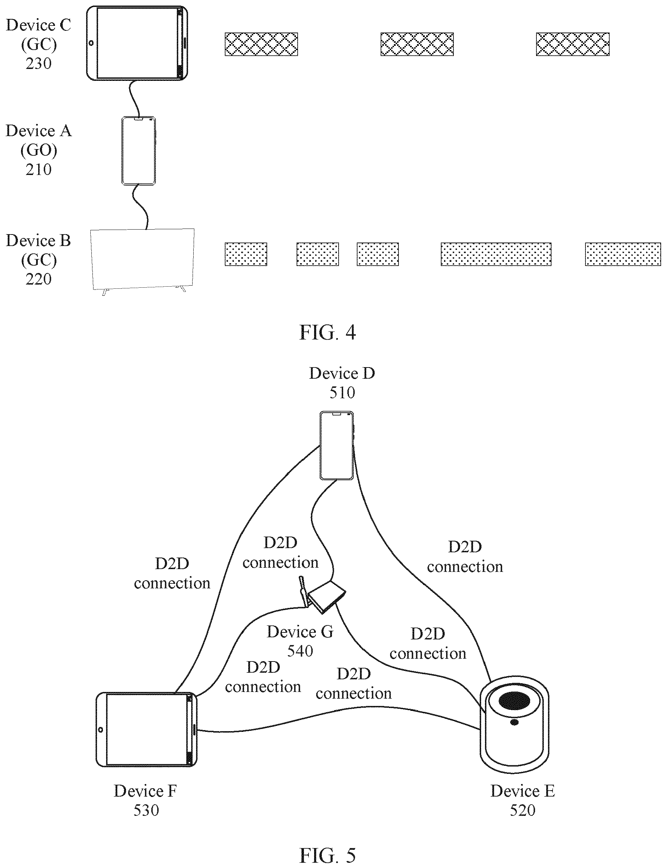

In the system, because the device A 210 notifies all GCs including the device B 220 and the device C 230 of the NoA signaling through broadcasting, transmission parameters used by the device A 210 to transmit data to the device B 220 and the device C 230 are the same, and the device A 210 can sleep only when sleep time periods of the device B 220 and the device C 230 are completely synchronized. However, during actual application, it may be difficult for the device B 220 and the device C 230 to have a same sleep time period. For example, as shown in FIG. 4, the device B 220 is playing an online video, data transmitted between the device A 210 and the device B 220 includes video frames, a corresponding service type is a video service, and a transmission mode is transmitting video frames at intervals of similar duration. The device C 230 is displaying a web page, data transmitted between the device A 210 and the device C 230 is web page data, a corresponding service type is a web page service, and for a transmission mode, an interval is not fixed and an amount of data transmitted each time is not fixed. Therefore, it is difficult for the device A 210 to enter the sleep state to reduce power consumption. If the device A 210 forcibly enters the sleep state, the device A may not send data to the device B 220 or the device C 230 in a timely manner. As a result, problems such as a video lag occurring on the device B 220 or a response timeout occurring on the device C 230 are caused, and user experience is reduced.

It should be noted that the system shown in FIG. 2 may include more or fewer GCs. In addition, it may be understood that, although in FIG. 2, the device A 210 is a mobile phone, the device B 220 is a smart television, and the device C 230 is a tablet computer, during actual application, the device A 210, the device B 220, or the device C 230 may alternatively be another electronic device that is shown in FIG. 1 and that is provided with a Wi-Fi chip. A device type of the GO or the GC is not limited in this embodiment of this application.

FIG. 5 is a schematic diagram of a data transmission system according to an embodiment of this application. The system may also be referred to as a D2D domain, and includes a device D 510, a device E 520, a device F 530, and a device G 540. Any two of the device D 510, the device E 520, the device F 530, and the device G 540 may be connected through a D2D-type connection.

The device G 540 is a primary domain device (or referred to as a primary domain node), and the device D 510, the device E 520, and the device F 530 are secondary domain devices (or referred to as secondary domain nodes). Compared with the system shown in FIG. 2, in the system shown in FIG. 5, any two electronic devices in the device D 510, the device E 520, the device F 530, the device G 540, and the like may perform data transmission without being limited by roles such as a GC or a GO. For example, the device D 510 is a mobile phone, the device E 520 is a home monitoring device, and the device F 530 is a tablet computer. The home monitoring device may unidirectionally project a monitoring picture to the mobile phone, and the mobile phone may also implement bidirectional multi-screen collaboration with the tablet computer.

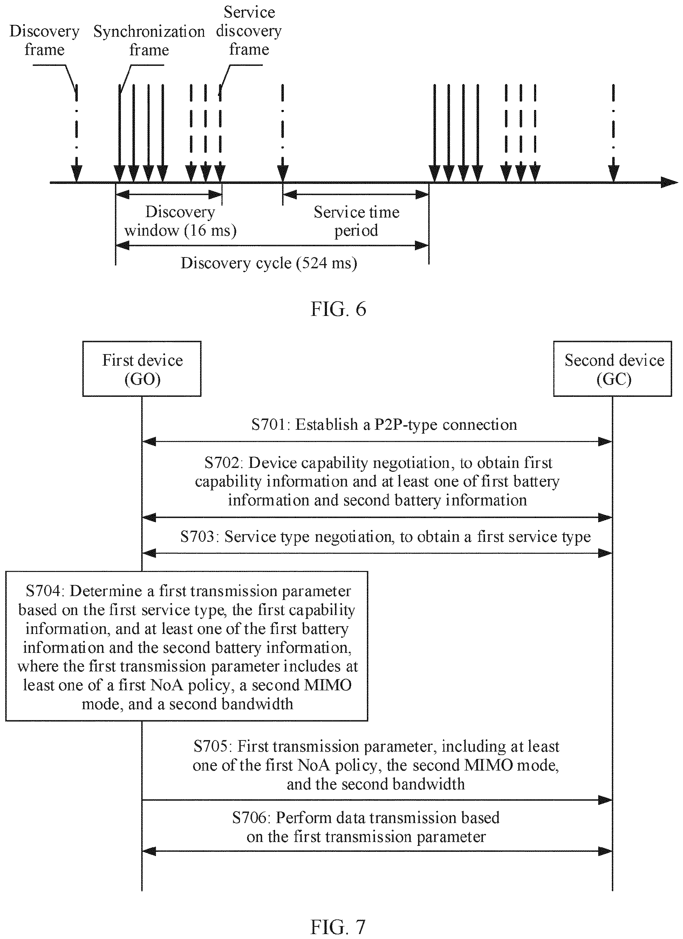

The device G 540 may periodically broadcast a synchronization frame. As shown in FIG. 6, the synchronization frame carries clock synchronization information. Correspondingly, all secondary domain devices, including the device D 510, the device E 520, and the device F 530, may periodically monitor the synchronization frame, and perform clock synchronization with the device D 510 based on the clock synchronization information. The device G 540 may further broadcast a discovery frame, where the discovery frame carries a network parameter of the system. Correspondingly, the device D 510, the device E 520, and the device F 530 may receive the discovery frame, and establish D2D-type connections to the device G 540 based on the network parameter.

When completing clock synchronization with the device G 540, the secondary domain device may obtain a DW and a discovery cycle (or referred to as a discovery interval or a scheduling cycle) of the device G 540. In a DW in each discovery cycle, the secondary domain device may receive a synchronization frame from the device G 540 and perform clock synchronization based on the synchronization frame, and may further receive a service discovery frame from another secondary domain device and establish a D2D connection with the another secondary domain device based on device identity information such as a device identifier carried in the service discovery frame. Each discovery cycle may further include a service time period. In the service time period, any two electronic devices (for example, the device D 510 and the device E 520) in the system may perform data transmission. One of the two electronic devices that perform data transmission is a primary transmission device, and the other is a secondary transmission device. The primary transmission device may control a data transmission process, for example, control channel switching. In addition, the secondary transmission device or the primary transmission device may further measure communication quality of a data transmission connection in the service time period, so that the primary transmission device may perform anti-interference operations such as channel switching based on a measurement result.

In the system shown in FIG. 5, all the secondary domain devices need to perform clock synchronization and communication quality measurement with the device G 540 in each discovery cycle of the device G 540. Therefore, this may cause a power consumption waste.

It should be noted that the system shown in FIG. 5 may include more or fewer secondary domain devices. In addition, it may be understood that, although in FIG. 5, the device D 510 is a mobile phone, the device E 520 is a home monitoring device, the device F 530 is a tablet computer, and the device G 540 is a router, during actual application, the device D 510, the device E 520, or the device F 530 may alternatively be another electronic device that is shown in FIG. 1 and that is provided with a Wi-Fi chip. Device types of the primary domain device and the secondary domain device are not limited in this embodiment of this application.

In addition, regardless of the system shown in FIG. 2 or the system shown in FIG. 5, in a data transmission process, both a MIMO mode and a maximum bandwidth of two electronic devices that perform data transmission are fixed. Therefore, this may also cause a power consumption waste. For example, when an amount of transmitted data is small, duration for actually transmitting the data may be less than allocated transmission duration, but electronic devices that perform transmission cannot enter the sleep state. For example, when the transmitted data is 1080P*360 frames per second (frame per second, FPS) audio/video, one frame of data is transmitted every 33.3 ms. If a transmission bandwidth is 80 MHz (megahertz), actually, one frame of data can be transmitted within 80 µs (microsecond), which is far less than a time interval of 33.3 ms. However, power consumption of two electronic devices that transmit the data is still not reduced in remaining time of the 33.3 ms.

It can be learned that, in the systems shown in FIG. 2 and FIG. 5, when two electronic devices perform data transmission, a fixed transmission mode is used for transmission, but impact of device capabilities of the electronic devices or a service type corresponding to transmitted data on a transmission process is not considered. Therefore, this may cause a power consumption waste, and is not conducive to a device with a poor battery capability. For example, the electronic devices that perform data transmission support more efficient transmission, but a transmission mode with low efficiency is still used in the actual transmission process. Consequently, sleep time of the electronic devices is reduced. Alternatively, the electronic device that performs data transmission currently has a low battery level, but a mode with high power consumption is used for transmission in the actual transmission process. Consequently, the electronic device is powered off earlier.

To resolve at least some of the foregoing technical problems, embodiments of this application provide a data transmission method based on Wi-Fi. In embodiments of this application, a first device may negotiate with a second device, to obtain first capability information jointly supported by the first device and the second device, a first service type corresponding to to-be-transmitted data, and at least one of first battery information of the first device and second battery information of the second device. Determining a first transmission parameter based on the first capability information, the first service type, and at least one of the first battery information and the second battery information of the second device is selecting, within a device capability range jointly supported by the first device and the second device, a transmission mode that matches the first service type of the to-be-transmitted data and a battery status of at least one of the first device and the second device. In this case, power consumption of at least one of the first device and the second device can be reduced by performing data transmission in the transmission mode.

Specific embodiments are used below to describe in detail the technical solutions of this application. The following several specific embodiments may be combined with each other, and a same or similar concept or process may not be described repeatedly in some embodiments.

FIG. 7 is a flowchart of a data transmission method based on Wi-Fi according to an embodiment of this application. The method may be applied to the system shown in FIG. 2. A first device may be a GO, for example, the device A210, and a second device may be a GC, for example, the device B 220 or the device C 230. It should be noted that the method is not limited to a specific sequence described in FIG. 7 and the following descriptions. It should be understood that, in other embodiments, sequences of some steps in the method may be interchanged based on an actual requirement, or some steps in the method may be omitted or deleted. The method includes the following steps.

S701: The first device establishes a P2P-type connection with the second device.

S702: The first device performs device capability negotiation with the second device, to obtain first capability information and at least one of first battery information and second battery information.

The first battery information may indicate a battery status of the first device, and the second battery information indicates a battery status of the second device. The first capability information may be capability information jointly supported by the first device and the second device, so that a device capability jointly supported by the first device and the second device can be indicated. Through the device capability negotiation, the first device and the second device may determine battery statuses of both the first device and the second device and whether adjustment of a data transmission mode is supported, for example, whether a transmission mode with low power consumption is supported.

In some embodiments, the first battery information may indicate at least one of a battery capacity of the first device, a battery level of the first device, a plug-in status of the first device, and a power saving mode status of the first device, the plug-in status of the first device includes being currently connected to a power supply or not being connected to a power supply, and the power saving mode status of the first device includes whether a power saving mode is enabled. The second battery information may indicate at least one of a battery capacity of the second device, a battery level of the second device, a plug-in status of the second device, and a power saving mode status of the second device, the plug-in status of the second device includes being currently connected to a power supply or not being connected to a power supply, and the power saving mode status of the second device includes whether a power saving mode is enabled.

For example, the first battery information may be shown in Table 1. A value range of a power status includes 0, 1, and 2, where 0 indicates that the first device is currently powered by a battery and has a low battery level, 1 indicates that the first device is currently powered by the battery and has a high battery level, and 2 indicates that the first device is currently in a plug-in state. A value range of the power saving mode includes 0 and 1, where 0 indicates that the first device does not enable the power saving mode, and 1 indicates that the first device enables the power saving mode.

**Table 1**

| Parameter type | Descriptions |
|---|---|
| Power status | 0: powered by the battery, with a low battery level (for example, lower than 50%); 1: powered by the battery, with a high battery level (for example, lower than or equal to 50%); 2: plugged in for use |
| Power saving mode | 0: power saving mode disabled; 1: power saving mode enabled |

It should be noted that in this embodiment of this application, the foregoing Table 1 is merely used for description of a manner in which the first battery information indicates at least one battery status in the battery capacity of the first device, the battery level of the first device, the plug-in status of the first device, and the power saving mode status of the first device, and does not constitute a limitation on the manner in which the first battery information indicates the battery status. During actual application, the first battery information may indicate the battery status of the first device by using more or fewer parameters.

In some embodiments, the first capability information may indicate that the first device and the second device support data transmission scheduling based on NoA signaling.

In some embodiments, the first capability information may indicate at least one first MIMO mode supported by the first device and the second device. Alternatively, in some other embodiments, the first device may determine (for example, according to a Wi-Fi protocol) in advance at least one MIMO mode supported by the second device, and determine, based on the at least one MIMO mode supported by the second device and at least one MIMO mode supported by the first device, the at least one first MIMO mode jointly supported by the first device and the second device. The first capability information may indicate whether the first device and the second device support adjustment of a maximum MIMO mode, and the at least one supported first MIMO mode does not need to be enumerated. Alternatively, in some other embodiments, the at least one first MIMO mode may not be determined by the first device based on the at least one MIMO mode supported by the second device and the at least one MIMO mode supported by the first device, but may be a preset MIMO mode in the first device or a MIMO mode supported by the first device. In this case, the first device may also determine, when determining that the first capability information indicates that the first device and the second device support adjustment of the maximum MIMO mode, a second MIMO mode in the at least one preset first MIMO mode or the at least one first MIMO mode supported by the first device.

It should be noted that the first MIMO mode may include M-input N-output, where M is a quantity of transmit antennas, N is a quantity of receive antennas, M and N are positive integers, and M and N may be the same.

In some embodiments, the first capability information may indicate at least one first bandwidth supported by the first device and the second device. Alternatively, in some other embodiments, the first device may determine (for example, according to the Wi-Fi protocol) in advance at least one MIMO mode supported by the second device, and determine, based on the at least one MIMO mode supported by the second device and at least one MIMO mode supported by the first device, the at least one first MIMO mode jointly supported by the first device and the second device. The first capability information may indicate whether the first device and the second device support adjustment of a maximum bandwidth, and the at least one supported first bandwidth does not need to be enumerated. Alternatively, in some other embodiments, the at least one first bandwidth may not be determined by the first device based on the at least one bandwidth supported by the second device and the at least one bandwidth supported by the first device, but may be a preset bandwidth in the first device or a bandwidth supported by the first device. In this case, the first device may also determine, when determining that the first capability information indicates that the first device and the second device support adjustment of the maximum bandwidth, a second bandwidth in the at least one preset first bandwidth or the at least one first bandwidth supported by the first device.

For example, the first capability information may be shown in Table 2. A value range of adaptive MIMO includes 0 and 1, where 0 indicates that at least one of the first device and the second device does not support adjustment of the maximum MIMO mode, and 1 indicates that the first device and the second device support adjustment of the maximum MIMO mode. A value range of an adaptive bandwidth includes 0 and 1, where 0 indicates that at least one of the first device and the second device does not support adjustment of the maximum bandwidth, and 1 indicates that the first device and the second device support adjustment of the maximum bandwidth.

**Table 2**

| Parameter type | Descriptions |
|---|---|
| Adaptive MIMO | 0: adjustment of the maximum MIMO mode not supported; 1: adjustment of the maximum MIMO mode supported |
| Adaptive bandwidth | 0: adjustment of the maximum bandwidth not supported; 1: adjustment of the maximum bandwidth supported |

It should be noted that in this embodiment of this application, the foregoing Table 2 is merely used for description of a manner in which the first capability information indicates the device capability, and does not constitute a limitation on the manner in which the first capability information indicates the device capability. During actual application, the first capability information may indicate the device capability by using more or fewer parameters.

In some embodiments, that the first device performs device capability negotiation with the second device may include: The second device sends the second battery information and second capability information of the second device to the first device, and the first device sends the first battery information and third capability information of the first device to the second device, so that the first device and the second device may obtain the first battery information and the second battery information, and the first device may also determine, based on the second capability information and the third capability information, the first capability information jointly supported by the first device and the second device. The second capability information may indicate a device capability supported by the second device, and the third capability information may indicate a device capability supported by the first device.

It should be noted that types of parameters included in the second capability information and the third capability information may be the same as a type of a parameter included in the first capability information, so that the first device determines the first capability information based on the first capability information and the third capability information.

For example, the second capability information indicates that the second device supports data transmission scheduling based on NoA signaling, and the third capability information indicates that the first device also supports data transmission scheduling based on NoA signaling. In this case, the first capability information may indicate that the first device and the second device support data transmission scheduling based on NoA signaling.

For another example, the second capability information indicates that a plurality of third MIMO modes supported by the second device include 2-input 2-output and 1-input 1-output, and the third capability information indicates that a plurality of fourth MIMO modes supported by the first device include 4-input 4-output, 2-input 2-output, and 1-input 1-output. In this case, the first device may determine that the at least one first MIMO mode indicated by the first capability information includes 2-input 2-output and 1-input 1-output. Alternatively, the second capability information indicates that the second device supports adjustment of the maximum MIMO mode, and the third capability information indicates that the first device supports adjustment of the maximum MIMO mode. In this case, the first capability information may indicate that both the first device and the second device support adjustment of the maximum MIMO mode.

For another example, the second capability information indicates that a plurality of third bandwidths supported by the second device include 40 MHz and 80 MHz, and the third capability information indicates that a plurality of fourth bandwidths supported by the first device include 40 MHz, 80 MHz, and 160 MHz. In this case, the first device may determine that the at least one first bandwidth indicated by the first capability information includes 40 MHz and 80 MHz.

In some embodiments, that the first device performs device capability negotiation with the second device may include: The first device sends a first obtaining request to the second device. The second device sends the second battery information and second capability information to the first device based on the first obtaining request. The first device receives the second battery information and the second capability information, and determines the first capability information based on the second capability information and third capability information. In other words, the first device no longer sends the first battery information and the third capability information to the second device.

It should be noted that the first device and the second device may alternatively perform device capability negotiation in another manner. A manner of the device capability negotiation is not specifically limited in this embodiment of this application.

S703: The first device performs service type negotiation with the second device, to obtain a first service type.

Because services performed by the first device and the second device may be different, service types corresponding to data transmitted by the first device and the second device may be different. When data of different service types is transmitted, requirements for transmission modes are also different. For example, in a video service, video frames may be transmitted at intervals of similar duration. However, in a web page service, an interval is not fixed and an amount of data transmitted each time is not fixed. If an amount of data that needs to be transmitted is large or data needs to be transmitted frequently, generated power consumption is also large. If an amount of data that needs to be transmitted is small or data only needs to be transmitted occasionally, the first device or the second device may sleep within idle time to reduce power consumption. Therefore, to enable a subsequent data transmission mode to match a service type of transmitted data, the first device and the second device may perform service type negotiation.

In some embodiments, the first device may send a second obtaining request to the second device, and the second device feeds back the first service type to the first device based on the second obtaining request. Certainly, during actual application, the first device and the second device may alternatively perform service type negotiation in another manner. A manner of the service type negotiation is not specifically limited in this embodiment of this application.

In some embodiments, service types may be classified based on functions of services, for example, classified as a video service or a web page service. In some other embodiments, service types may be classified based on data stream directions of services, for example, classified as a unidirectional streaming service or a bidirectional streaming service. It should be noted that a service type classification manner may be determined in advance by persons skilled in the art. During actual application, service types may alternatively be classified based on features of another aspect of to-be-transmitted services. The service type classification manner is not specifically limited in this embodiment of this application.

For example, a value range of the first service type may include 0, 1, and 2, where 0 indicates web page browsing, 1 indicates audio or video projection, and 2 indicates real-time control.

S704: The first device determines a first transmission parameter based on the first service type, the first capability information, and at least one of the first battery information and the second battery information.

Because the first capability information may indicate the device capability jointly supported by the first device and the second device, a plurality of transmission modes may be implemented between the first device and the second device based on the first capability information. In these transmission modes, a transmission mode may be more suitable for transmitting data of the first service type, and power consumption of a transmission mode is lower. In this case, the first device determines the first transmission parameter based on the first service type, the first capability information, and at least one of the first battery information and the second battery information. In other words, the first device selects, within a device capability range jointly supported by the first device and the second device, a transmission mode that matches the first service type of to-be-transmitted data and a battery status of at least one of the first device and the second device.

In some embodiments, the first device may store a correspondence between battery information, capability information, a service type, and a transmission parameter. The correspondence includes at least one piece of battery information, at least one piece of capability information, at least one service type, and at least one transmission parameter. The first device may obtain, from the correspondence, the first transmission parameter corresponding to the first service type, the first capability information, and at least one of the first battery information and the second battery information.

In some embodiments, the first device may input the first service type, the first capability information, and at least one of the first battery information and the second battery information into a trained machine learning model, and obtain the first transmission parameter by using the machine learning model.

Certainly, during actual application, the first device may alternatively determine, in another manner, the first transmission parameter based on the first service type, the first capability information, and at least one of the first battery information and the second battery information. A specific manner of determining the first transmission parameter based on the first service type, the first capability information, and at least one of the first battery information and the second battery information is not limited in this embodiment of this application.

In some embodiments, the first transmission parameter may include at least one of a first NoA policy, the second MIMO mode, and the second bandwidth. In some embodiments, the first capability information indicates that the first device and the second device support data transmission scheduling based on NoA signaling. In this case, the first device may determine a first notification of active NoA policy based on the first service type, the first capability information, and at least one of the first battery information and the second battery information. In some embodiments, the first capability information indicates the at least one first MIMO mode supported by the first device and the second device, and the first device may determine the second MIMO mode from the at least one first MIMO mode based on the first service type and at least one of the first battery information and the second battery information. Alternatively, the first capability information indicates that the first device and the second device support adjustment of the maximum MIMO mode, and the first device may determine the second MIMO mode from the at least one first MIMO mode. In some embodiments, the first capability information indicates the at least one first bandwidth supported by the first device and the second device, and the first device may determine the second bandwidth from the at least one first bandwidth based on the first service type and at least one of the first battery information and the second battery information. Alternatively, the first capability information indicates that the first device and the second device support adjustment of the maximum bandwidth, and the first device may determine the second bandwidth from the at least one first bandwidth.

The first NoA policy may include a first transmission time period interval and a first sleep time period.

It should be noted that, if the first device and the second device are more sensitive to power consumption, power consumption of a transmission mode indicated by the first transmission parameter may be lower. For example, if neither the first device nor the second device is connected to a power supply, and battery capacities and battery levels of the first device and the second device are lower, duration of the first sleep time period in the first NoA policy may be longer, N and M in the second MIMO mode may be smaller, and a value of the second bandwidth may be smaller.

For example, the first device determines that the second battery information of the second device includes: power saving mode: 1 and power status: 0, indicating that the second device currently enables a power saving state, is not connected to a power supply, and has a low battery level; determines that the first capability information includes: adaptive MIMO: 1 and adaptive bandwidth: 1, indicating that both the first device and the second device support adjustment of the maximum MIMO mode and the maximum bandwidth; and determines that the first service type is 0, that is, web page browsing. In this case, the first device determines that the second MIMO mode is 1*1 (that is, 1-input 1-output), the second bandwidth is 20 MHz, the first transmission time period interval included in the first NoA policy is 200 ms, and the first sleep time period is 100 ms. Alternatively, the second battery information and the first capability information remain unchanged, but the first service type is 1, that is, audio or video projection. In this case, the first device determines that the second MIMO mode is 1*1, the second bandwidth is 40 MHz, the first transmission time period interval included in the first NoA policy is 33 ms, and the first sleep time period is 10 ms. Alternatively, the second battery information and the first capability information remain unchanged, but the first service type is 2, that is, audio or video projection. In this case, the first device determines that the second MIMO mode is 2*2 (that is, 2-input 2-output) and the second bandwidth is 40 MHz, and does not determine the first NoA policy, in other words, disables NoA scheduling. It can be learned that the first device may determine the matched first transmission parameter based on the second battery information, the first capability information, and the first service type. When at least one (for example, the first service type) of the second battery information, the first capability information, and the first service type is different, the determined first transmission parameter is also different to match a battery status of at least one of the first device and the second device and a service type of transmitted data. This can resolve a problem of a power consumption waste, and resolve a problem of user experience deterioration caused by mismatch between a transmission mode and a service type.

S705: The first device notifies the second device of the first transmission parameter.

The first transmission parameter may include at least one of the first NoA policy, the second MIMO mode, and the second bandwidth.

In some embodiments, the first device may send first NoA signaling to the second device, and the first NoA signaling carries the first NoA policy.

In some embodiments, when obtaining the first transmission parameter, the second device may send a corresponding answer to the first device, so that the first device determines that the second device obtains the first transmission parameter.

S706: The first device performs data transmission with the second device based on the first transmission parameter.

Because the first transmission parameter is the transmission mode that is selected by the first device within the device capability range jointly supported by the first device and the second device and that matches the first service type of the to-be-transmitted data and the battery status of at least one of the first device and the second device, power consumption of at least one of the first device and the second device can be reduced when the first device performs data transmission with the second device based on the first transmission parameter.

In some embodiments, if the first transmission parameter includes the first NoA policy, the first device and the second device may start to enter a sleep state at an interval of the first transmission time period interval (that is, the first sleep time period). When the first sleep time period ends, the first device and the second device may enter a wake-up state. In the wake-up state, the first device performs data transmission with the second device. For example, the first device may send data to the second device. Therefore, the first device and the second device may adjust a transmission time period interval and a sleep time period based on support of both the first device and the second device, to enable a sleep occasion and sleep duration to match a power status of at least one of the first device and the second device and the service type of the transmitted data. This can resolve a problem of a power consumption waste, and resolve a problem of user experience deterioration caused by mismatch between a transmission mode and a service type. When the duration of the first sleep time period is longer, power consumption generated by the first device and the second device is lower.

In some embodiments, if the first transmission parameter includes the second MIMO mode, the first device and the second device receive and send data based on the second MIMO mode, for example, use the second MIMO mode as the maximum MIMO mode. The first device and the second device may adjust an antenna working mode based on support of both the first device and the second device, to enable the antenna working mode to match a power status of at least one of the first device and the second device and the service type of the transmitted data. This resolves a problem of a power consumption waste. When the second MIMO mode indicates fewer antennas used to transmit and receive data, power consumption generated by the first device and the second device is lower.

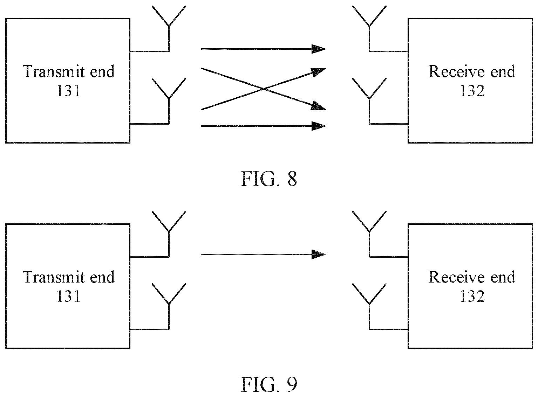

For example, the first device and the second device support a 2-input 2-output mode shown in FIG. 8 and a 1-input 1-output mode shown in FIG. 9. In the 2-input 2-output mode, data is transmitted or received through two antennas. In the 1-input 1-output mode, data is transmitted or received through one antenna. Power consumption generated in the 2-input 2-output mode is higher than power consumption generated in the 1-input 1-output mode, but data transmission efficiency of the 2-input 2-output mode is also higher than data transmission efficiency of the 1-input 1-output mode. If the first service type has a low requirement on transmission efficiency, the first device and the second device may perform data transmission in the 1-input 1-output mode, to reduce power consumption. If the first service type has a high requirement on transmission efficiency, the first device and the second device may perform data transmission in the 2-input 2-output mode, to ensure transmission efficiency.

In some embodiments, if the first transmission parameter includes the second bandwidth, the first device and the second device may use the second bandwidth as the maximum bandwidth for data transmission. The first device and the second device may adjust a transmission bandwidth based on support of both the first device and the second device, to enable the transmission bandwidth to match a power status of at least one of the first device and the second device and the service type of the transmitted data. This resolves a problem of a power consumption waste. When the second bandwidth is smaller, generated power consumption is lower.

In some embodiments, if the first service type is a unidirectional streaming service, the first device may obtain a plurality of to-be-transmitted first data packets, aggregate the plurality of first data packets into a second data packet, and send the second data packet to the second device based on the first transmission parameter.

When the first service type is a unidirectional streaming service, the first device may transmit one first data packet to the second device at an interval of first duration. A first transmission interval may be short, and it is difficult for the first device and the second device to sleep within the first transmission interval. Therefore, the first device may aggregate the plurality of first data packets to obtain the large second data packet, and send the second data packet to the second device. In other words, the first device may send the plurality of first data packets to the second device in a centralized manner. A transmission mode is changed from sending one first data packet at an interval of the first duration to sending one second data packet at an interval of second duration. A plurality of pieces of short first duration originally required for sending the plurality of first data packets may be aggregated into one piece of long second duration. The first device and the second device may sleep within the second duration, to reduce power consumption.

It should be noted that a quantity of first data packets included in the second data packet, that is, a quantity of aggregated first data packets, may be 2, 3, 4, or another value. The quantity is not limited in this embodiment of this application.

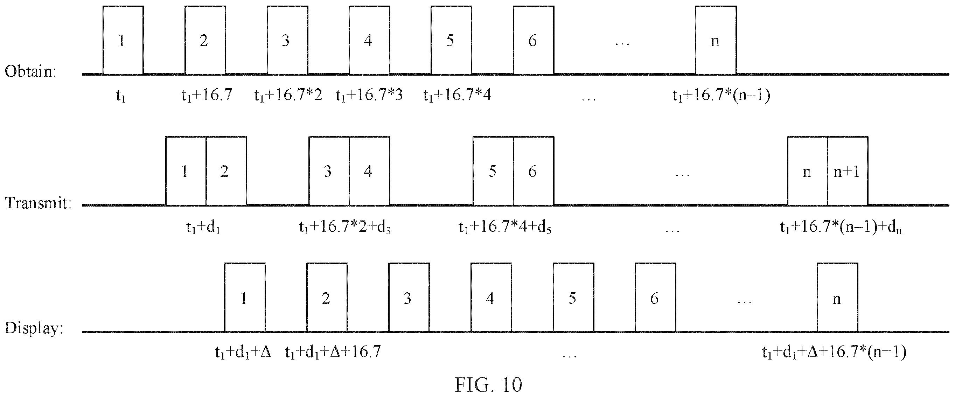

For example, as shown in FIG. 10, in a process in which the first device performs projection to the second device, transmitted data is video frames. The first device obtains an image by using an application program and encodes the image, and may generate one video frame every 16.7 ms. A moment at which the first device generates an n^{th} video frame is *t*₁ +16.7*(*n*-1). If single-frame transmission is performed, the first device sends one video frame to the second device every 16.7 ms. The second device receives the video frame every 16.7 ms, and decodes and displays the video frame. First duration is 16.7 ms. The duration is short, and it is difficult for the first device and the second device to sleep within the duration. Therefore, the first device may aggregate two video frames for transmission, and second duration of an interval for transmitting the video frames is changed to 33.4 ms. A moment at which the first device transmits the n^{th} video frame and an (n+1)^{th} video frame is *t*₁ +16.7*(*n*-1) + *dₙ*, and *dₙ* is a delay when the first device sends the n^{th} video frame and the (n+1)^{th} video frame. The second device receives two video frames every 33.4 ms and buffers the two video frames in a video buffer, but still obtains each frame of image from the video buffer according to a cycle of 16.7 ms, and decodes and displays the image. A moment at which the second device displays the n^{th} video frame is *t*₁ +*d*₁ +Δ+16.7*(*n*-1), and Δ is transmission duration. It can be learned from comparison that the second duration is longer than the first duration, and the first device and the second device may sleep within the 33.4 ms, to reduce power consumption.

It may be understood that, after the first device and the second device perform S701 to establish a connection at a time, device capabilities, power statuses, and a service type of transmitted data of the first device and the second device may change. Correspondingly, the first device and the second device perform steps similar to or the same as at least some steps in S702 to S706 again, to obtain at least one of new capability information, new battery information, and a new service type, redetermine a second transmission parameter, and perform data transmission based on the newly determined second transmission parameter. In other words, the first device and the second device do not need to perform S701 each time when the data transmission method provided in this embodiment of this application is performed.

For example, after S706, the service type corresponding to the data transmitted between the first device and the second device is changed to a second service type. In this case, the first device and the second device may determine the second transmission parameter based on the first capability information, the second service type, and at least one of the first battery information and the second battery information, and perform data transmission based on the second transmission parameter.

In this embodiment of this application, the first device may negotiate with the second device, to obtain the first capability information jointly supported by the first device and the second device, the first service type corresponding to the to-be-transmitted data, and at least one of the first battery information of the first device and the second battery information of the second device. Determining the first transmission parameter based on the first capability information, the first service type, and at least one of the first battery information and the second battery information of the second device is selecting, within the device capability range jointly supported by the first device and the second device, the transmission mode that matches the first service type of the to-be-transmitted data and the battery status of at least one of the first device and the second device. In this case, the power consumption of at least one of the first device and the second device can be reduced by performing data transmission in the transmission mode. The first transmission parameter includes the first NoA policy, and the first device and the second device may start to enter the sleep state at an interval of the first transmission time period interval (that is, the first sleep time period). When the first sleep time period ends, the first device and the second device may enter the wake-up state. In the wake-up state, the first device performs data transmission with the second device. Therefore, the first device and the second device may adjust the transmission time period interval and the sleep time period based on support of both the first device and the second device, to enable the sleep occasion and the sleep duration to match the battery status of at least one of the first device and the second device and the service type of the transmitted data. This can resolve the problem of a power consumption waste, and resolve the problem of user experience deterioration caused by mismatch between a transmission mode and a service type. In addition, when the second device is different, the first service type negotiated by the first device and the second device may be different. Correspondingly, the first transmission parameter may also be different. In this case, for different second devices, the first device may perform data transmission based on a first transmission parameter corresponding to each second device, including sleep based on a first NoA policy corresponding to each second device. For example, in FIG. 4, if the first device is the device A 210, and second devices include the device B 220 and the device C 230, when the device A 210 performs data transmission with the device B 220, a first NoA policy in a first transmission parameter may correspond to a first service type negotiated by the device A 210 and the device B 220, and when the device A 210 performs data transmission with the device C 230, a first NoA policy in a first transmission parameter may correspond to a first service type negotiated by the device A 210 and the device C 230. Therefore, the device A 210 may sleep in both a process of performing data transmission with the device B 220 and a process of performing data transmission with the device C 230, and this avoids a problem that the device A 210 cannot sleep because a unified NoA policy is used.

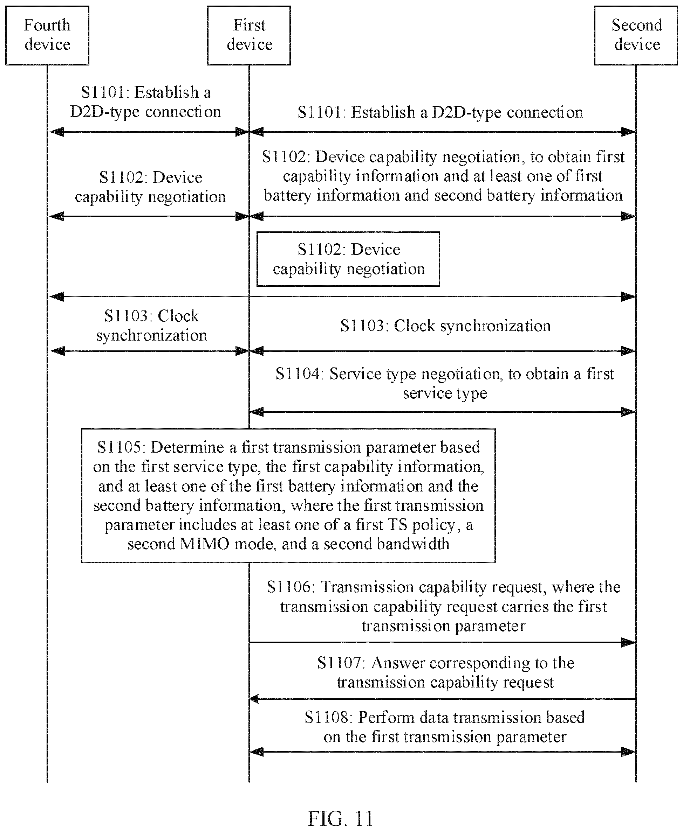

FIG. 11 is a flowchart of a data transmission method based on Wi-Fi according to an embodiment of this application. The method may be applied to the system shown in FIG. 5. A first device may be a primary transmission device, for example, the device G 540, and a second device and a fourth device may be secondary transmission devices, for example, the device D 510 and the device E 520. It should be noted that, when the first device is the primary transmission device, the first device may also serve as a primary domain device of a D2D domain in which the first device is located; or the first device may not be the primary domain device, and the primary domain device is another device in the D2D domain, for example, a third device. It should be further noted that the method is not limited to a specific sequence described in FIG. 11 and the following descriptions. It should be understood that, in other embodiments, sequences of some steps in the method may be interchanged based on an actual requirement, or some steps in the method may be omitted or deleted. The method includes the following steps.

S 1101: The first device establishes a D2D-type connection with the second device.

If the first device is the primary domain device, the second device may discover, by using a synchronization frame broadcast by the first device, the first device serving as the primary domain device, and establish the D2D-type connection with the first device. If the first device is not the primary domain device, the first device and the second device may first discover the third device serving as the primary domain device, then discover each other in a DW of the third device, and further establish the D2D-type connection.

In some embodiments, if the first device and the second device are sensitive to power consumption, for example, battery capacities of the first device and the second device are small or the first device and the second device are not connected to power supplies, the first device and the second device may perform device discovery and authentication through Bluetooth and establish a Bluetooth connection, then negotiate, based on the Bluetooth connection, related information for establishing the D2D-type connection, such as a channel number and a key, and then establish the D2D-type connection based on the related information.

Certainly, during actual application, the first device and the second device may alternatively establish the D2D-type connection in another manner. A manner in which the first device and the second device establish the D2D-type connection is not specifically limited in this embodiment of this application.

S1102: The first device performs device capability negotiation with the second device, to obtain first capability information and at least one of first battery information and second battery information.

In some embodiments, the first capability information may indicate whether the first device and the second device support scheduling of a TS.

One discovery cycle may include one DW and one service time period, one service time period may include a plurality of TSs, and the TS is a basic scheduling unit in the service time period.

It should be noted that duration of the discovery cycle, the DW, or the TS is not limited in this embodiment of this application. For example, the TS may be 16 ms. For another example, as shown in FIG. 6, the discovery cycle may be 524 ms, and the DW may be 16 ms.

In some embodiments, the first capability information may indicate at least one first MIMO mode supported by the first device and the second device. Alternatively, in some other embodiments, the first capability information may indicate whether the first device and the second device support adjustment of a maximum MIMO mode, and the at least one supported first MIMO mode does not need to be enumerated.

In some embodiments, the first capability information may indicate at least one first bandwidth supported by the first device and the second device. Alternatively, in some other embodiments, the first capability information may indicate whether the first device and the second device support adjustment of a maximum bandwidth, and the at least one supported first bandwidth does not need to be enumerated.

It should be noted that for a manner in which the first device performs device capability negotiation with the second device, refer to related descriptions in S702. Details are not described herein again.

S1103: The first device performs clock synchronization with the second device.

The first device performs clock synchronization with the second device, so that the first device and the second device can subsequently receive or send data based on a same time period or similar time periods. This improves data transmission reliability.

In some embodiments, the first device is the primary domain device, and may broadcast clock synchronization information in the DW. The clock synchronization information may carry a first timestamp at which the clock synchronization information is sent. If receiving the clock synchronization information, the second device may generate a second timestamp at which the clock synchronization information is received. The second device may determine a time difference between the second device and the first device based on the first timestamp, the second timestamp, and a propagation speed of an optical signal, and adjust a current first moment of the second device based on the time difference, to complete clock synchronization with the first device.

Certainly, during actual application, the first device and the second device may alternatively perform clock synchronization in another manner. A manner of the clock synchronization is not specifically limited in this embodiment of this application.

In some embodiments, to further reduce power consumption, the first device and the second device may alternatively determine a first synchronization cycle, and perform clock synchronization based on the first synchronization cycle, without a need to perform synchronization in each discovery cycle. In other words, S1103 is an optional step. The first synchronization cycle may be an integer multiple of the discovery cycle. In some embodiments, the first synchronization cycle may be represented as Q discovery cycles, and Q is a positive integer greater than or equal to 2.

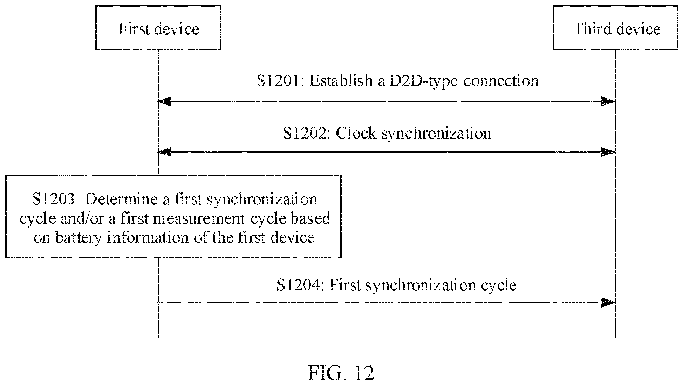

A manner of determining the first synchronization cycle may be shown in FIG. 12.

It should be noted that, if the primary domain device is the third device instead of the first device, the first device and the second device may perform clock synchronization with the third device in a manner similar to that of the second device in S1 103.

S1104: The first device performs service type negotiation with the second device, to obtain a first service type.

For a manner in which the first device performs service type negotiation with the second device, refer to related descriptions in S703. Details are not described herein again.

It should be noted that, after S1101 and before S1105, the first device and the second device may determine, through negotiation, which one of the first device and the second device is the secondary transmission device and which one is the primary transmission device. Certainly, during actual application, which one of the first device and the second device is the secondary transmission device and which one is the primary transmission device may alternatively be determined in another manner. A manner of determining a primary transmission device and a secondary transmission device in two parties for data transmission is not specifically limited in this embodiment of this application.

S1105: The first device determines a first transmission parameter based on the first service type, the first capability information, and at least one of the first battery information and the second battery information.

Because the first capability information may indicate a device capability jointly supported by the first device and the second device, a plurality of transmission modes may be implemented between the first device and the second device based on the first capability information. In these transmission modes, a transmission mode may be more suitable for transmitting data of the first service type, and power consumption of a transmission mode is lower. In this case, the first device determines the first transmission parameter based on the first service type, the first capability information, and at least one of the first battery information and the second battery information. In other words, the first device selects, within a device capability range jointly supported by the first device and the second device, a transmission mode that matches the first service type of to-be-transmitted data and a battery status of at least one of the first device and the second device.

For a manner in which the first device determines the first transmission parameter based on the first service type, the first capability information, and at least one of the first battery information and the second battery information, refer to related descriptions in S704. Details are not described herein again.

In some embodiments, the first transmission parameter may include at least one of a first time slot (time slot, TS) policy, a second MIMO mode, and a second bandwidth. In some embodiments, the first capability information indicates that the first device and the second device support scheduling of a TS. In this case, the first device determines the first TS policy based on the first service type, the first capability information, and at least one of the first battery information and the second battery information. In some embodiments, the first capability information indicates the at least one first MIMO mode supported by the first device and the second device, and the first device may determine the second MIMO mode from the at least one first MIMO mode based on the first service type and at least one of the first battery information and the second battery information. Alternatively, the first capability information indicates that the first device and the second device support adjustment of the maximum MIMO mode, and the first device may determine the second MIMO mode from the at least one first MIMO mode. In some embodiments, the first capability information indicates the at least one first bandwidth supported by the first device and the second device, and the first device may determine the second bandwidth from the at least one first bandwidth based on the first service type and at least one of the first battery information and the second battery information. Alternatively, the first capability information indicates that the first device and the second device support adjustment of the maximum bandwidth, and the first device may determine the second bandwidth from the at least one first bandwidth.

The first TS policy may indicate a wake-up-state TS and a sleep-state TS, and an electronic device that performs data transmission may sleep or perform data transmission in a unit of TS. In some embodiments, the first TS policy may indicate the wake-up-state TS and the sleep-state TS in a bitmap (bitmap) manner.

In some embodiments, the first TS policy may indicate a length of the discovery cycle, for example, a total quantity of TSs included in the discovery cycle.

In some embodiments, one discovery cycle may be represented as shown in Table 3. The first TS policy may include discovery cycle: 32, indicating that one discovery cycle includes 32 TSs. The first TS policy may further include a 32-bit bitmap: 1111 0000 0110 0000 1100 0011 0000 0110, to indicate whether each corresponding TS is a wake-up-state TS or a sleep-state TS, where 0 indicates a sleep-state TS, and 1 indicates a wake-up-state TS.

**Table 3**

| | | | | | | |
|---|---|---|---|---|---|---|
| 0 | 1 | 2 | 3 | 4 | ... | 31 |
| 1 | 1 | 1 | 1 | 0 | ... | 0 |

As shown in Table 3, the first row in an X^{th} column may indicate an X^{th} TS in the discovery cycle, and the second row in the X^{th} column may indicate whether the TS is a sleep-state TS or a wake-up-state TS.

It should be noted that it can be learned from the foregoing descriptions that a discovery cycle includes a discovery window and a service time period. At least one TS (for example, the 0^{th} and the 1^{st} TSs) in the front of the discovery cycle shown in Table 3 may correspond to a discovery window, and is used for clock synchronization. Other TSs (for example, the 2^{nd} to the 31^{st} TSs) after the at least one TS may correspond to a service time period. An electronic device that performs data transmission may sleep in a sleep-state TS corresponding to the service time period, and perform data transmission in a wake-up-state TS corresponding to the service time period. In addition, it should be further noted that a quantity of TSs used for clock synchronization in each discovery cycle may be notified by the primary domain device to the secondary domain device. Certainly, the secondary domain device may alternatively determine, in another manner, the quantity of TSs used for clock synchronization in each discovery cycle. A manner of determining the quantity of TSs used for clock synchronization in each discovery cycle is not specifically limited in this embodiment of this application.

For example, the first device determines that the second battery information of the second device includes: power saving mode: 1 and power status: 0, indicating that the second device currently enables a power saving state, is not connected to a power supply, and has a low battery level; determines that the first capability information includes: adaptive MIMO: 1 and adaptive bandwidth: 1, indicating that both the first device and the second device support adjustment of the maximum MIMO mode and the maximum bandwidth; and determines that the first service type is 0, that is, web page browsing. In this case, the first device determines that the second MIMO mode is 1*1 (that is, 1-input 1-output), the second bandwidth is 20 MHz, and the first TS policy includes discovery cycle: 32 and bitmap: 1110 0000 0110 0000 1100 0011 0000 0110. Alternatively, the second battery information and the first capability information remain unchanged, but the first service type is 1, that is, audio or video projection. In this case, the first device determines that the second MIMO mode is 1*1, the second bandwidth is 20 MHz, and the first TS policy includes discovery cycle: 32 and bitmap: 1110 0100 0110 0010 1100 0100 0000 0110. Alternatively, the second battery information and the first capability information remain unchanged, but the first service type is 2, that is, audio or video projection. In this case, the first device determines that the second MIMO mode is 2*2 (that is, 2-input 2-output), the second bandwidth is 40 MHz, and the first TS policy includes discovery cycle: 32 and bitmap: 1110 0100 0110 0010 1100 0100 0000 0110. It can be learned that the first device may determine the matched first transmission parameter based on the second battery information, the first capability information, and the first service type. When at least one (for example, the first service type) of the second battery information, the first capability information, and the first service type is different, the determined first transmission parameter is also different to match a battery status of at least one of the first device and the second device and a service type of transmitted data. This can resolve a problem of a power consumption waste, and resolve a problem of user experience deterioration caused by mismatch between a transmission mode and a service type.

S1106: The first device sends a transmission capability request to the second device, where the transmission capability request carries the first transmission parameter.

S1107: The second device may send, to the first device, an answer corresponding to the transmission capability request.

It should be noted that, during actual application, the first device may alternatively enable, in another manner, the second device to obtain the first transmission parameter, for example, through broadcasting.

It should be noted that, during actual application, when obtaining the first transmission parameter, the second device may not send the answer corresponding to the transmission capability request to the second device. Therefore, S1107 is an optional step.

S1108: The first device performs data transmission with the second device based on the first transmission parameter.

The first device and the second device may perform data transmission in the service time period of the discovery cycle.

In some embodiments, based on the first TS policy, the first device and the second device may perform data transmission in a wake-up-state TS corresponding to the service time period, and enter a sleep state in a sleep-state TS corresponding to the service time period.

It should be noted that, if the primary domain device is the third device instead of the first device, and the first device does not transmit data to another electronic device, the first device may also enter the sleep state in the sleep-state TS corresponding to the service time period.

The first device and the second device may sleep in a unit of TS based on the first TS policy, so that control precision of a sleep occasion and sleep duration is improved, and power consumption can be further reduced.

In some embodiments, if the first service type is a unidirectional streaming service, the first device may obtain a plurality of to-be-transmitted first data packets, aggregate the plurality of first data packets into a second data packet, and send the second data packet to the second device based on the first transmission parameter.

In some embodiments, the first device determines a first measurement cycle, and measures communication quality of the connection between the first device and the second device in a service time period in a discovery cycle corresponding to the first measurement cycle. In some other embodiments, the second device determines a second measurement cycle, measures the communication quality of the connection between the first device and the second device in the service time period in the discovery cycle corresponding to the first measurement cycle, and notifies the first device of a measurement result. Correspondingly, the first device may also receive the measurement result. The first measurement cycle and the second measurement cycle each may be an integer multiple of the discovery cycle. In some embodiments, the first synchronization cycle may be represented as P discovery cycles, and P is a positive integer greater than or equal to 2.

A manner in which the first device determines the first measurement cycle may be shown in FIG. 12.

It may be understood that, after the first device and the second device perform S1101 to establish a connection at a time, device capabilities, power statuses, and a service type of transmitted data of the first device and the second device may change. Correspondingly, the first device and the second device perform steps similar to or the same as at least some steps in S 1102 to S 1108 again, to obtain at least one of new capability information, new battery information, and a new service type, redetermine a second transmission parameter, and perform data transmission based on the newly determined second transmission parameter. In other words, the first device and the second device do not need to perform S1101 each time when the data transmission method provided in this embodiment of this application is performed.

In this embodiment of this application, the first device may negotiate with the second device, to obtain the first capability information jointly supported by the first device and the second device, the first service type corresponding to the to-be-transmitted data, and at least one of the first battery information of the first device and the second battery information of the second device. Determining the first transmission parameter based on the first capability information, the first service type, and at least one of the first battery information and the second battery information of the second device is selecting, within the device capability range jointly supported by the first device and the second device, the transmission mode that matches the first service type of the to-be-transmitted data and the battery status of at least one of the first device and the second device. In this case, power consumption of at least one of the first device and the second device can be reduced by performing data transmission in the transmission mode. The first transmission parameter includes the first TS policy, and at least one of the first device and the second device may sleep in a unit of TS, to improve the control precision of the sleep occasion and the sleep duration, and further reduce the power consumption.

In some embodiments, the first device may further establish a D2D-type connection and perform data transmission with the fourth device in a manner similar to the manner in which the first device performs data transmission with the second device. In S1101, the first device may establish the D2D-type connection with the fourth device. In S1102, the first device may perform device capability negotiation with the fourth device. In S1103, the first device may perform clock synchronization with the fourth device. In S1104, the first device may perform service capability negotiation with the fourth device. Then, the first device may determine a third transmission parameter in a manner similar to or the same as that in S1105, notify the fourth device of the third transmission parameter in a manner similar to or the same as that in S1106 and S1107, and perform data transmission with the fourth device in a manner similar to or the same as that in S1108. It can be learned that, because power statuses of the first device, the second device, and the fourth device may be different, the device capability jointly supported by the first device and the second device may be different from a device capability jointly supported by the first device and the fourth device, and the service type of the data transmitted between the first device and the second device may also be different from a service type of data transmitted between the first device and the fourth device. In this case, the first device and the second device may perform data transmission with the second device based on the first transmission parameter, and perform data transmission with the fourth device based on the third transmission parameter. In this way, when data transmission is performed with different electronic devices, data transmission may be performed in matched transmission modes based on a difference between device capabilities jointly supported with the electronic devices, a difference between battery statuses, and a difference between service types of transmitted data.

Similarly, steps similar to or the same as at least some steps in S1101 to S1108 may also be performed between the fourth device and the second device, to implement data transmission between the fourth device and the second device. In addition, it should be noted that, as shown in FIG. 11, the fourth device and the second device may first perform device capability negotiation to determine a device capability jointly supported by the fourth device and the second device. In this case, if the fourth device subsequently needs to perform data transmission with the second device, the fourth device does not need to perform device capability negotiation with the second device again. This reduces waiting time before data transmission, and improves efficiency of subsequent data transmission between the fourth device and the second device.

In other words, in some embodiments, any device in a D2D domain may discover another device in the same D2D domain in advance (for example, in a DW), and performs device capability negotiation with the another device. Similarly, the device may also perform service capability negotiation with the another device. Therefore, when the device subsequently needs to perform data transmission with a device, the device may directly determine a transmission parameter based on a negotiation result and perform data transmission based on the transmission parameter. This improves data transmission efficiency. Certainly, any device in a D2D domain may not perform device capability negotiation or service capability negotiation with another device in the same D2D domain in advance, but performs device capability negotiation and service capability negotiation with a device when data transmission needs to be performed with the device.

FIG. 12 is a flowchart of a method for determining a synchronization cycle or a measurement cycle according to an embodiment of this application. The method may be applied to the system shown in FIG. 5. A first device and a second device may be secondary domain devices, for example, the device D 510, the device E 520, or the device F 530, and a third device may be a primary domain device, for example, the device G 540. It should be noted that the method is not limited to a specific sequence described in FIG. 12 and the following descriptions. It should be understood that, in other embodiments, sequences of some steps in the method may be interchanged based on an actual requirement, or some steps in the method may be omitted or deleted. The method includes the following steps.

S1201: The first device establishes a D2D-type connection with the third device.

It should be noted that a manner in which the first device establishes the D2D-type connection with the third device may be similar to the manner in which the first device establishes the D2D-type connection with the second device in S1101. Details are not described herein again.

S1202: The first device performs clock synchronization with the third device.

It should be noted that, for a manner in which the first device performs clock synchronization with the third device, refer to the manner in which the first device performs clock synchronization with the second device in S1103. Details are not described herein again.

S1203: The first device determines a first synchronization cycle and/or a first measurement cycle based on battery information of the first device.

When the first device is not connected to a power supply, has a lower battery capacity, and has a lower battery level, the first synchronization cycle and the first measurement cycle may be longer.

In some embodiments, the first device may determine the first synchronization cycle and/or the first measurement cycle based on a first service type and the battery information of the first device. In some embodiments, the first device may determine the first synchronization cycle based on the battery information of the first device and at least one of a crystal oscillator parameter of the first device and a first service type.

The crystal oscillator parameter may indicate clock precision of the first device. When the clock precision is higher, the first synchronization cycle may be longer.

It should be noted that if a service type of data that can be transmitted by the first device is single, to be specific, the first device can transmit only data of the first service type, the first device may determine the first service type even if the first device does not perform service type negotiation with the second device. Therefore, when determining the first synchronization cycle or the first measurement cycle, the first device may determine the first service type.

For example, the first device determines that second battery information of the second device includes: power saving mode: 1 and power status: 0, indicating that the second device currently enables a power saving state, is not connected to a power supply, and has a low battery level; and determines that the first service type is 0, that is, web page browsing. In this case, the first device determines that a synchronization cycle is 4 (discovery cycles) and a measurement cycle is 4 (discovery cycles). Alternatively, the second battery information and first capability information remain unchanged, but the first service type is 1, that is, audio or video projection. In this case, the first device determines that a synchronization cycle is 4 (discovery cycles) and a measurement cycle is 2 (discovery cycles). Alternatively, the second battery information and first capability information remain unchanged, but the first service type is 2, that is, audio or video projection. In this case, the first device determines that a synchronization cycle is 4 (discovery cycles) and a measurement cycle is 1 (discovery cycle). It can be learned that the first device may determine the matched discovery cycle and the matched measurement cycle based on the second battery information and the first service type. When at least one (for example, the first service type) of the second battery information and the first service type is different, the determined discovery cycle and the determined measurement cycle are also different to match a battery status of at least one of the two parties and a service type of transmitted data. This can reduce a power consumption waste.

S 1204: The first device notifies the third device of the first synchronization cycle.

Because the first device is the secondary domain device, and the third device is the primary domain device, the third device may send a control instruction to the first device in a DW, for example, to control the first device to be powered off. If the first device is in a sleep state in a DW in a specific discovery cycle, the first device may not receive the control instruction. Therefore, the first device may notify the third device of the determined first synchronization cycle, to improve stability of a transmission system.

It should be noted that, in some other embodiments, the third device may not send the control instruction to the first device in the DW. Therefore, the first device may not notify the third device of the first synchronization cycle. Therefore, S1204 is an optional step.

In some embodiments, the first device may perform clock synchronization with the third device in a DW in a discovery cycle corresponding to the first synchronization cycle. In this case, in a DW in a discovery cycle that does not correspond to the first synchronization cycle, the first device may enter the sleep state within time originally used for clock synchronization, to reduce power consumption.

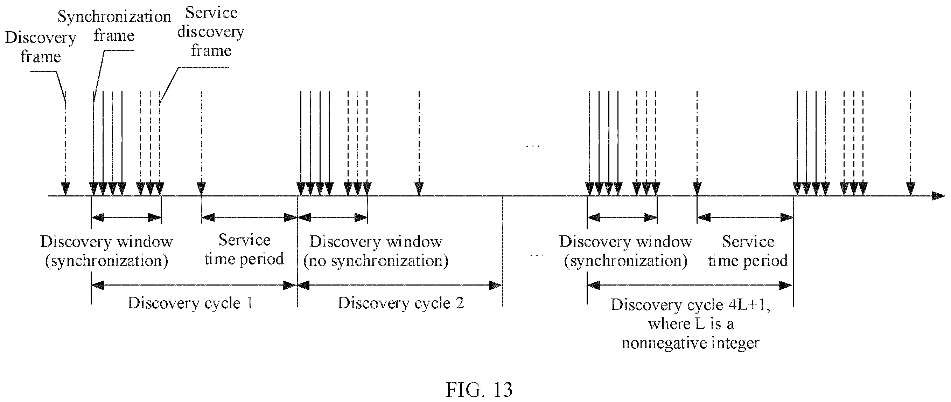

For example, the first synchronization cycle is four discovery cycles, in other words, the first device performs clock synchronization with the third device every four discovery cycles. With reference to FIG. 13, the first device performs clock synchronization with the third device in a DW of a (4L+1)^{th} discovery cycle, where L is a nonnegative integer. In this case, in DWs in (4L+1)^{th}, (4L+2)^{th}, and (4L+3)^{th} discovery cycles, the first device does not need to perform clock synchronization with the third device, and therefore may enter the sleep state within time originally used for clock synchronization.

In some embodiments, if the first device performs data transmission with the second device, the first device may measure communication quality of a connection between the first device and the second device in a service time period in a discovery cycle corresponding to the first measurement cycle. In this case, in a service time period that does not correspond to the first measurement cycle, the first device may not perform communication quality measurement, and time originally used for measurement may be used for sleep, to reduce power consumption.

In this embodiment of this application, the first device may determine the first synchronization cycle based on the battery information of the first device, and perform clock synchronization with the third device based on the first synchronization cycle. Therefore, the first device may enter the sleep state within the time that is originally used for clock synchronization and that is included in the DW of the discovery cycle that does not correspond to the first synchronization cycle, to reduce power consumption. The first device may also determine the first measurement cycle based on the battery information of the first device, and measure the communication quality of the connection between the first device and the second device based on the first measurement cycle. Therefore, in the service time period of the discovery cycle that does not correspond to the first measurement cycle, the time originally used for measurement may be used for sleep, to reduce power consumption.

Similarly, the second device may also determine at least one of the first synchronization cycle or the first measurement cycle in a manner similar to that in S1201 to S 1204.

Based on a same inventive concept, as an implementation of the foregoing methods, an embodiment of this application provides a data transmission apparatus. The apparatus embodiment corresponds to the foregoing method embodiments. For ease of reading, detailed content in the foregoing method embodiments is not described in detail in this apparatus embodiment. However, it should be understood that the apparatus in this embodiment can correspondingly implement all content in the foregoing method embodiments.

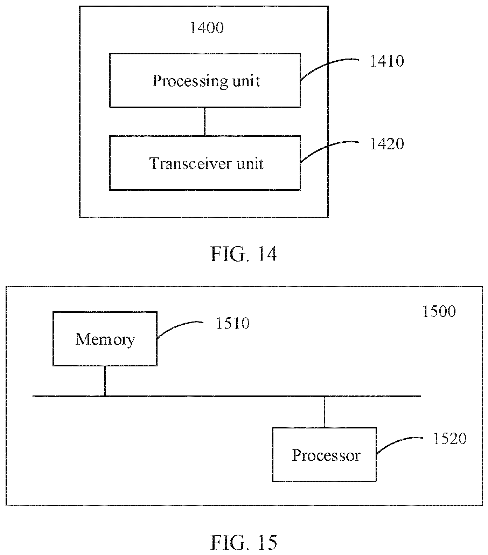

FIG. 14 is a schematic diagram of a structure of the data transmission apparatus 1400 according to this embodiment of this application. As shown in FIG. 14, the apparatus provided in this embodiment includes a processing unit 1410 and a transceiver unit 1420.

In a possible implementation, the data transmission apparatus 1400 may correspond to the first device in the foregoing method embodiments, for example, may be the first device or a chip configured in the first device. The data transmission apparatus 1400 is configured to perform steps or procedures corresponding to the first device in the foregoing methods.

The processing unit 1410 is configured to: negotiate, with a second device, first capability information, a first service type, and at least one of first battery information and second battery information; and determine a first transmission parameter based on the first service type, the first capability information, and at least one of the first battery information and the second battery information.

The transceiver unit 1420 is configured to: send the first transmission parameter to the second device; and perform data transmission with the second device based on the first transmission parameter.

The first battery information indicates a battery status of the data transmission apparatus 1400, the second battery information indicates a battery status of the second device, the first capability information indicates a device capability jointly supported by the data transmission apparatus 1400 and the second device, the first service type is a service type corresponding to to-be-transmitted data of the data transmission apparatus 1400 and the second device, and the data transmission apparatus 1400 and the second device are connected through Wi-Fi.

Optionally, the first capability information indicates at least one first MIMO mode for which the data transmission apparatus 1400 and the second device support adjustment, and the processing unit 1410 is specifically configured to:
determine a second MIMO mode from the at least one first MIMO mode based on the first service type and at least one of the first battery information and the second battery information.

Optionally, the first capability information indicates that the data transmission apparatus 1400 and the second device support adjustment of a maximum MIMO mode, and the processing unit 1410 is specifically configured to:
determine at least one first MIMO mode jointly supported by the data transmission apparatus 1400 and the second device; and
determine a second MIMO mode from the at least one preset first MIMO mode based on the first service type and at least one of the first battery information and the second battery information.

Optionally, the first capability information indicates at least one first bandwidth supported by the data transmission apparatus 1400 and the second device, and the processing unit 1410 is specifically configured to:
determine a second bandwidth from the at least one first bandwidth based on the first service type and at least one of the first battery information and the second battery information.

Optionally, the first capability information indicates that the data transmission apparatus 1400 and the second device support adjustment of a maximum bandwidth, and the processing unit 1410 is specifically configured to:
determine at least one first bandwidth jointly supported by the data transmission apparatus 1400 and the second device; and
determine a second bandwidth from the at least one preset first bandwidth based on the first service type and at least one of the first battery information and the second battery information.

Optionally, the first battery information indicates at least one of a battery capacity of the data transmission apparatus 1400, a battery level of the data transmission apparatus 1400, plug-in status indication information of the data transmission apparatus 1400, and a power saving mode status of the data transmission apparatus 1400, a plug-in status of the data transmission apparatus 1400 includes that the data transmission apparatus 1400 is currently connected to a power supply or is not connected to a power supply, and the power saving mode status of the data transmission apparatus 1400 includes whether a power saving mode is enabled. The second battery information indicates at least one of a battery capacity of the second device, a battery level of the second device, a plug-in status of the second device, and a power saving mode status of the second device, the plug-in status of the second device includes being currently connected to a power supply or not being connected to a power supply, and the power saving mode status of the second device includes whether a power saving mode is enabled.

Optionally, a type of a connection between the data transmission apparatus 1400 and the second device is a P2P type, the data transmission apparatus 1400 is a GO, and the second device is a GC.

Optionally, the first capability information indicates that the data transmission apparatus 1400 and the second device support data transmission scheduling based on NoA signaling, and the processing unit 1410 is specifically configured to:
determine a first NoA policy based on the first service type, the first capability information, and at least one of the first battery information and the second battery information.

Optionally, the data transmission apparatus 1400 and the second device are devices in a same D2D domain, a type of a connection between the data transmission apparatus 1400 and the second device is a D2D type, the data transmission apparatus 1400 is a primary transmission device, the second device is a secondary transmission device, and the primary transmission device is configured to control a data transmission process between the primary transmission device and the secondary transmission device.

Optionally, the first capability information indicates that the data transmission apparatus 1400 and the second device support scheduling of a TS, and the processing unit 1410 is specifically configured to:
determine a first TS policy based on the first service type, the first capability information, and at least one of the first battery information and the second battery information.

Optionally, the data transmission apparatus 1400 is a secondary domain device, the D2D domain further includes a third device serving as a primary domain device, and the processing unit 1410 is further configured to:
determine a first synchronization cycle based on the first battery information; and
perform clock synchronization with the third device based on the first synchronization cycle.

Optionally, the transceiver unit 1420 is further configured to:
notify the third device of the first synchronization cycle.

Optionally, the processing unit 1410 is further configured to:
determine a first measurement cycle based on the first battery information; and
measure communication quality of the connection between the first device and the second device based on the first measurement cycle.

Optionally, if the first service type is a unidirectional streaming service, the transceiver unit 1420 is specifically configured to:
obtain a plurality of to-be-transmitted first data packets;
aggregate the plurality of first data packets into a second data packet; and
send the second data packet to the second device based on the first transmission parameter.

In a possible implementation, the data transmission apparatus 1400 may correspond to the second device in the foregoing method embodiments, for example, may be the second device or a chip configured in the second device. The data transmission apparatus 1400 is configured to perform steps or procedures corresponding to the second device in the foregoing methods.

Persons skilled in the art may clearly understand that, for the purpose of convenient and brief description, division into the foregoing functional units or modules is merely used as an example for description. During actual application, the foregoing functions may be allocated to different functional units or modules for implementation based on a requirement. In other words, an inner structure of the apparatus is divided into different functional units or modules to implement all or some of the functions described above. The functional units or modules in this embodiment may be integrated into one processing unit, or each of the units may exist alone physically, or two or more units may be integrated into one unit. The integrated unit may be implemented in a form of hardware, or may be implemented in a form of a software functional unit. In addition, specific names of the functional units or modules are merely used for ease of distinguishing between the functional units or modules, but are not intended to limit the protection scope of this application. For a specific working process of the units or modules in the foregoing system, refer to a corresponding process in the foregoing method embodiments. Details are not described herein again.

The data transmission apparatuses in the foregoing solutions have functions of implementing corresponding steps performed by the first device or the second device in the foregoing methods, and have similar technical effect. The functions may be implemented by hardware, or may be implemented by hardware by executing corresponding software. The hardware or software includes one or more modules corresponding to the foregoing functions. For example, a communication unit may be replaced by a transceiver (for example, a sending unit in the communication unit may be replaced by a transmitter, and a receiving unit in the communication unit may be replaced by a receiver), and another unit, for example, the processing unit, may be replaced by a processor, to separately perform sending and receiving operations and related processing operations in the method embodiments.

In addition, the communication unit may alternatively be a transceiver circuit (for example, may include a receiving circuit and a sending circuit), and the processing unit may be a processing circuit. In this embodiment of this application, the data transmission apparatus in FIG. 14 may be the electronic device in the foregoing embodiment, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

Based on a same inventive concept, an embodiment of this application further provides an electronic device. FIG. 15 is a schematic diagram of a structure of the electronic device 1500 according to this embodiment of this application. As shown in FIG. 15, the electronic device provided in this embodiment includes a memory 1510 and a processor 1520. The memory 1510 is configured to store a computer program. The processor 1520 is configured to perform the method in the foregoing method embodiments when invoking the computer program.

The electronic device provided in this embodiment can perform the foregoing method embodiments, and implementation principles and technical effect of the electronic device are similar to those of the foregoing method embodiments. Details are not described herein again.

Based on a same inventive concept, an embodiment of this application further provides a chip system. The chip system includes a processor. The processor is coupled to a memory, and the processor executes a computer program stored in the memory to implement the method in the foregoing method embodiments.

The chip system may be a single chip, or a chip module including a plurality of chips.

An embodiment of this application further provides a computer-readable storage medium. The computer-readable storage medium stores a computer program. When the computer program is executed by a processor, the method in the foregoing method embodiments is implemented.

An embodiment of this application further provides a computer program product. When the computer program product runs on an electronic device, the electronic device is enabled to perform the method in the foregoing method embodiments.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file form, an intermediate form, or the like. The computer-readable storage medium may include at least any entity or apparatus that can include the computer program code in a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, descriptions of the embodiments have respective focuses. For a part that is not described in detail or recorded in an embodiment, refer to related descriptions in another embodiment.

Persons of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

In embodiments provided in this application, it should be understood that the disclosed apparatus/devices and methods may be implemented in other manners. For example, the described apparatus/device embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

It should be understood that the term "include"/"comprise" used in the specification and the appended claims of this application indicates presence of the described features, wholes, steps, operations, elements, and/or components, but does not preclude presence or addition of one or more other features, wholes, steps, operations, elements, components, and/or collections thereof.

It should be further understood that the term "and/or" used in the specification and the appended claims of this application refers to any combination of one or more of associated items and all possible combinations, and includes such combinations.

As used in the specification and the appended claims of this application, according to the context, the term "if" may be interpreted as "when", "once", "in response to determining", or "in response to detecting". Similarly, according to the context, the phrase "if it is determined that" or "if (a described condition or event) is detected" may be interpreted as a meaning of "once it is determined that", "in response to determining", "once (the described condition or event) is detected", or "in response to detecting (the described condition or event)".

In addition, in descriptions of the specification and the appended claims of this application, terms "first", "second", "third", and the like are merely used for distinguishing description, but cannot be understood as indicating or implying relative importance.

Reference to "an embodiment", "some embodiments", or the like described in the specification of this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in the specification do not necessarily mean reference to a same embodiment, but instead mean "one or more but not all embodiments", unless otherwise specifically emphasized in another manner. Terms "include", "contain", "have", and other variants thereof all mean "include but are not limited to", unless otherwise specifically emphasized in another manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A data transmission method based on a wireless network Wi-Fi, comprising:
negotiating, by a first device with a second device, first capability information, a first service type, and at least one of first battery information and second battery information;
determining, by the first device, a first transmission parameter based on the first service type, the first capability information, and at least one of the first battery information and the second battery information;
sending, by the first device, the first transmission parameter to the second device; and
performing, by the first device, data transmission with the second device based on the first transmission parameter, wherein
the first battery information indicates a battery status of the first device, the second battery information indicates a battery status of the second device, the first capability information indicates a device capability jointly supported by the first device and the second device, the first service type is a service type corresponding to to-be-transmitted data of the first device and the second device, and the first device and the second device are connected through Wi-Fi.

2. The method according to claim 1, wherein the first capability information indicates at least one first multiple-input multiple-output MIMO mode for which the first device and the second device support adjustment, and the determining, by the first device, a first transmission parameter based on the first service type, the first capability information, and at least one of the first battery information and the second battery information comprises:
determining, by the first device, a second MIMO mode from the at least one first MIMO mode based on the first service type and at least one of the first battery information and the second battery information.

3. The method according to claim 1, wherein the first capability information indicates that the first device and the second device support adjustment of a maximum MIMO mode, and before the determining, by the first device, a first transmission parameter based on the first service type, the first capability information, and at least one of the first battery information and the second battery information, the method further comprises:
determining, by the first device, at least one first MIMO mode jointly supported by the first device and the second device; and
the determining, by the first device, a first transmission parameter based on the first service type, the first capability information, and at least one of the first battery information and the second battery information comprises:
determining, by the first device, a second MIMO mode from the at least one first MIMO mode based on the first service type and at least one of the first battery information and the second battery information.

4. The method according to any one of claims 1 to 3, wherein the first capability information indicates at least one first bandwidth supported by the first device and the second device, and the determining, by the first device, a first transmission parameter based on the first service type, the first capability information, and at least one of the first battery information and the second battery information comprises:
determining, by the first device, a second bandwidth from the at least one first bandwidth based on the first service type and at least one of the first battery information and the second battery information.

5. The method according to any one of claims 1 to 3, wherein the first capability information indicates that the first device and the second device support adjustment of a maximum bandwidth, and before the determining, by the first device, a first transmission parameter based on the first service type, the first capability information, and at least one of the first battery information and the second battery information, the method further comprises:
determining, by the first device, at least one first bandwidth jointly supported by the first device and the second device; and
the determining, by the first device, a first transmission parameter based on the first service type, the first capability information, and at least one of the first battery information and the second battery information comprises:
determining, by the first device, a second bandwidth from the at least one first bandwidth based on the first service type and at least one of the first battery information and the second battery information.

6. The method according to any one of claims 1 to 5, wherein the first battery information indicates at least one of a battery capacity of the first device, a battery level of the first device, a plug-in status of the first device, and a power saving mode status of the first device, the plug-in status of the first device comprises being currently connected to a power supply or not being connected to a power supply, and the power saving mode status of the first device comprises whether a power saving mode is enabled; and the second battery information indicates at least one of a battery capacity of the second device, a battery level of the second device, a plug-in status of the second device, and a power saving mode status of the second device, the plug-in status of the second device comprises being currently connected to a power supply or not being connected to a power supply, and the power saving mode status of the second device comprises whether a power saving mode is enabled.

7. The method according to any one of claims 1 to 6, wherein a type of a connection between the first device and the second device is a peer-to-peer P2P type, the first device is a group owner GO, and the second device is a group client GC.

8. The method according to claim 7, wherein the first capability information indicates that the first device and the second device support data transmission scheduling based on notification of active NoA signaling, and the determining, by the first device, a first transmission parameter based on the first service type, the first capability information, and at least one of the first battery information and the second battery information comprises:
determining, by the first device, a first NoA policy based on the first service type, the first capability information, and at least one of the first battery information and the second battery information.

9. The method according to any one of claims 1 to 6, wherein the first device and the second device are devices in a same device-to-device D2D domain, a type of a connection between the first device and the second device is a D2D type, the first device is a primary transmission device, the second device is a secondary transmission device, and the primary transmission device is configured to control a data transmission process between the primary transmission device and the secondary transmission device.

10. The method according to claim 9, wherein the first capability information indicates that the first device and the second device support scheduling of a time slot TS, and the determining, by the first device, a first transmission parameter based on the first service type, the first capability information, and at least one of the first battery information and the second battery information comprises:
determining, by the first device, a first TS policy based on the first service type, the first capability information, and at least one of the first battery information and the second battery information.

11. The method according to claim 9 or 10, wherein the first device is a secondary domain device, the D2D domain further comprises a third device serving as a primary domain device, and the method further comprises:
determining, by the first device, a first synchronization cycle based on the first battery information; and
performing, by the first device, clock synchronization with the third device based on the first synchronization cycle.

12. The method according to claim 11, wherein the method further comprises:
notifying, by the first device, the third device of the first synchronization cycle.

13. The method according to any one of claims 9 to 12, wherein the method further comprises:
determining, by the first device, a first measurement cycle based on the first battery information; and
measuring, by the first device, communication quality of the connection between the first device and the second device based on the first measurement cycle.

14. The method according to any one of claims 1 to 13, wherein if the first service type is a unidirectional streaming service, the performing, by the first device, data transmission with the second device based on the first transmission parameter comprises:
obtaining, by the first device, a plurality of to-be-transmitted first data packets;
aggregating, by the first device, the plurality of first data packets into a second data packet; and
sending, by the first device, the second data packet to the second device based on the first transmission parameter.

15. An electronic device, comprising a memory and a processor, wherein the memory is configured to store a computer program, and the processor is configured to perform the method according to any one of claims 1 to 14 when invoking the computer program.

16. A computer-readable storage medium, wherein the computer-readable storage medium stores a computer program; and when the computer program is executed by a processor, the method according to any one of claims 1 to 14 is implemented.
